(19) Europäisches Patentamt
European Patent Office
Office européen des brevets

(11) EP 4 693 026 A1

(12) **EUROPEAN PATENT APPLICATION**
published in accordance with Art. 153(4) EPC

(43) Date of publication:
**11.02.2026 Bulletin 2026/07**

(21) Application number: **23929170.1**

(22) Date of filing: **28.03.2023**

(51) International Patent Classification (IPC):
***G06F 8/65*** *(2018.01)*

(52) Cooperative Patent Classification (CPC):
**G06F 8/65**

(86) International application number:
**PCT/CN2023/084363**

(87) International publication number:
**WO 2024/197570 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Shenzhen Yinwang Intelligent Technologies Co., Ltd.**
**Shenzhen, Guangdong 518110 (CN)**

(72) Inventors:
- **LIU, Qiong**
  **Shenzhen, Guangdong 518129 (CN)**
- **ZHU, Cheng**
  **Shenzhen, Guangdong 518129 (CN)**
- **YANG, Haiquan**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

# (54) UPGRADING DETECTION METHOD AND DEVICE

(57) An update detection method and apparatus are provided. The method includes: When an ECU performs a first reset operation and the ECU is disconnected from an OTA installer, the ECU may resume communication between the ECU and the OTA installer by performing at least one second reset operation within a first time range. The first reset operation is a 1st reset operation performed by the ECU after the ECU programs first update software. In this way, within the first time range, the ECU can receive a first packet sent by the OTA installer, and the OTA installer can also receive a feedback of the ECU on the first packet. The first packet is used to request to obtain a version number of update software currently used by the ECU. This method can improve a success rate of updating the ECU, and helps improve reliability of OTA update of an entire vehicle.

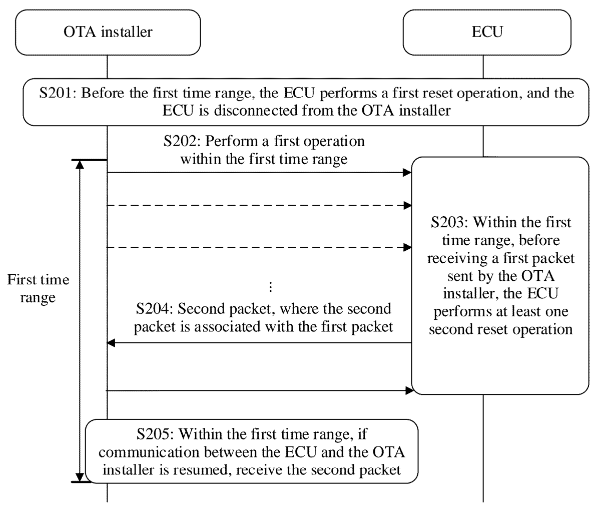


FIG. 2



EP 4 693 026 A1

## Description

### TECHNICAL FIELD

This application relates to the over-the-air (over-the-air, OTA) technology field, and in particular, to an update detection method and apparatus.

### BACKGROUND

OTA update is important for an intelligent vehicle and can implement software and/or firmware update in the vehicle. The OTA update is timely, convenient, and cheap, and is capable of quickly fixing vehicle software defects and importing new functions, to implement iterative update of vehicle functions and improve vehicle user experience.

Modules participating in the OTA update mainly include an OTA installer (for example, using a unified diagnostic service UDS) and a to-be-updated electronic control unit ECU. After the ECU performs reset based on reset information sent by the OTA installer and starts newly installed update software, if the ECU is disconnected from the OTA installer, the OTA installer cannot obtain a version number of the newly installed update software of the ECU, and consequently cannot determine whether the ECU is appropriately updated to a latest version. As a result, the OTA installer considers that the ECU fails to be updated, and a success rate of updating the ECU is low.

### SUMMARY

This application discloses an update detection method and apparatus, to help improve a success rate of updating an ECU, and help improve reliability of OTA update of an entire vehicle.

According to a first aspect, this application provides an update detection method. The method includes: Within a first time range, an electronic control unit ECU receives a first packet sent by an over-the-air OTA installer, and the ECU sends a second packet to the OTA installer in response to the first packet, where the first packet is used to request to obtain a version number of update software currently used by the ECU; before the first time range, the ECU performs a first reset operation, and the ECU is disconnected from the OTA installer, where the first reset operation is a 1st reset operation performed by the ECU after the ECU programs first update software; and within the first time range and before the ECU receives the first packet, the ECU performs at least one second reset operation or at least one rollback operation.

Herein, the first reset operation is a reset operation in a conventional ECU update procedure. To be specific, after the OTA installer learns that the ECU completes programming of the first update software, the OTA installer sends first reset information to the ECU, to indicate the ECU to perform the first reset operation.

The second reset operation is different from the first reset operation, and the second reset operation is a reset operation performed after the first reset operation. In other words, the second reset operation is a new reset operation. The second reset operation is used to re-run or restart the first update software on which OTA programming is performed. For example, programming may mean burning a software program to a specific address of a memory of an ECU chip.

Herein, a prerequisite for the ECU to perform a rollback operation is that the ECU programs update software in a partition manner. For example, the ECU includes a first partition and a second partition, the first partition is configured to store the first update software, the second partition is configured to store second update software, the second update software is software used before the ECU programs the first update software, and the rollback operation means that the ECU switches from the first partition to the second partition to start or run the second update software, and may also be referred to as a rollback operation.

Herein, that the ECU is disconnected from the OTA installer means that the ECU cannot communicate with the OTA installer, or at least one communication link between the ECU and the OTA installer cannot be used to implement communication between the ECU and the OTA installer. Specifically, it is assumed that the ECU communicates with the OTA installer based on a first communication link. If the ECU is disconnected from the OTA installer, the ECU cannot receive information sent by the OTA installer to the ECU based on the first communication link, and the OTA installer cannot receive information sent by the ECU to the OTA installer based on the first communication link.

The OTA installer is configured to install, roll back, and reset OTA software for the ECU. The OTA installer may be, for example, an ECU Master. The OTA installer may be deployed on a specific component in a vehicle, for example, a domain controller, to update an ECU mounted to the domain controller.

The OTA installer is deployed on the domain controller of the vehicle. The domain controller includes but is not limited to one or more of the following: an integrated software and hardware platform used to support intelligent driving, namely, an onboard computing platform, for example, a mobile data center (mobile data center, MDC); an integrated software and hardware platform used to support body control and chassis control, for example, a vehicle domain controller (vehicle domain controller, VDC); an integrated software and hardware platform used to provide an in-vehicle multimedia service (for example, at least one of a head-up display, a dashboard display, and an entertainment audio and video), for example, a cockpit domain controller (cockpit domain controller, CDC) and a central computing unit; and the like.

For example, when the OTA installer uses a unified diagnostic service (unified diagnostic service, UDS), the OTA installer may also be referred to as a UDS installer.

In the foregoing method, after the ECU successfully starts the first update software based on the first reset operation, when the ECU is disconnected from the OTA installer, in one manner, the second reset operation is added to the ECU, which helps resolve a problem of a disconnection between the ECU and the OTA installer; and a quantity of times of performing the second reset operation by the ECU is increased, which helps improve a success rate of resuming the communication between the ECU and the OTA installer, and further helps improve a success rate of updating the ECU and reliability of updating the entire vehicle. In another manner, the ECU is set to start software of an earlier version (where this process may also be referred to as performing a rollback operation by the ECU), which helps resume the communication between the ECU and the OTA installer. In this way, the second packet fed back by the ECU can also enable the OTA installer to accurately learn an update result of the ECU. In a process of unifying version software of the entire vehicle, this helps improve accuracy of decision-making of the entire vehicle, and further helps improve reliability of updating the entire vehicle.

Optionally, the first packet and the second packet are carried on the first communication link, and the first communication link includes a diagnostic communication link based on an Ethernet and/or a diagnostic communication link based on a first in-vehicle signal bus.

For example, the first communication link may be understood as a diagnostic communication link used to carry information exchanged between the ECU and the OTA installer. The first communication link may be set by default before delivery, or may be preset by a user.

For example, when the ECU is directly mounted to a domain controller integrated with the OTA installer, or when the ECU is mounted to a domain controller integrated with the OTA installer through a distributed gateway, and a communication connection mode between the ECU and the distributed gateway and a communication connection mode between the distributed gateway and the OTA installer are the same, the first communication link is the diagnostic communication link based on the Ethernet or the diagnostic communication link based on the first in-vehicle signal bus. If the ECU is mounted to the domain controller integrated with the OTA installer through the distributed gateway, and the communication connection mode between the ECU and the distributed gateway and the communication connection mode between the distributed gateway and the OTA installer are different, the first communication link includes the diagnostic communication link based on the Ethernet and the diagnostic communication link based on the first in-vehicle signal bus.

It can be learned that, based on a mounting mode between the OTA installer and the ECU, the first communication link may have a plurality of forms.

Optionally, within the first time range and before the ECU receives the first packet, when the ECU performs the at least one second reset operation, the second packet includes a version number of the first update software. In this way, a receiving end of the second packet (namely, the OTA installer) can determine that the ECU is successfully updated. This improves a success rate of updating the ECU.

Optionally, within the first time range and before the ECU receives the first packet, when the ECU performs the at least one rollback operation (or starts the software of the earlier version at least once), the second packet includes a version number of the second update software. The second update software is software used before the ECU programs the first update software. In this way, a receiving end of the second packet (namely, the OTA installer) can determine that current update of the ECU fails. This helps improve accuracy of subsequent decision-making of the entire vehicle.

Optionally, a trigger condition for the ECU to perform the at least one second reset operation is as follows:

within first preset duration after the ECU starts the first update software, the ECU does not receive the first packet sent by the OTA installer;
within second preset duration after the ECU starts the first update software, the ECU does not receive a heartbeat packet sent by the OTA installer;
the ECU receives first indication information, where the first indication information indicates that the ECU is disconnected from the OTA installer, or indicates the ECU to start performing the second reset operation; or
the ECU receives power-off indication information, where the power-off indication information is used by the ECU to perform the second reset operation.

Herein, the heartbeat packet sent by the OTA installer is used to notify a peer end (namely, the ECU) that the OTA installer is alive.

For example, the power-off indication information may be included in the first indication information.

For example, the first indication information is update indication information that carries an update package.

For example, a quantity of times of receiving the first indication information by the ECU is not limited in this application.

In an implementation, before the first time range and within third preset duration after the ECU 1 starts the first update software, the ECU 1 receives the first indication information only once, that is, the ECU is triggered to perform the at least one second reset operation.

In another implementation, if the ECU can receive the first indication information for a plurality of times within the first time range, that the ECU performs the at least one second reset operation means that the ECU performs the second reset operation once each time the ECU receives the first indication information. For example, the first indication information is obtained by the ECU from the OTA installer. In a specific implementation, the first indication information may alternatively be obtained by the ECU from an OTA manager or a vehicle control apparatus. Herein, the OTA manager (OTA Manager) may also be referred to as an OTA manager or an OTA controller (OTA Controller).

In the foregoing implementation, a trigger condition is set for the ECU to perform the second reset operation, so that consumption of computing resources of the ECU and consumption of electric energy can be reduced.

Correspondingly, a second trigger condition may also be set for the ECU to perform the rollback operation (or start the second update software), and the second trigger condition may be any one of the following conditions:

(1) within first preset duration after the ECU starts the first update software, the ECU does not receive the first packet sent by the OTA installer;
(2) within second preset duration after the ECU starts the first update software, the ECU does not receive a heartbeat packet sent by the OTA installer; or
(3) the ECU receives second indication information, where the second indication information indicates that the ECU is disconnected from the OTA installer, or indicates the ECU to start performing the rollback operation.

Optionally, the first indication information is carried on a second communication link, and the second communication link is different from the first communication link.

For example, a type of the second communication link may be a diagnostic communication link or a service communication link. A packet carried on the diagnostic communication link may be referred to as a diagnostic packet, and a packet carried on the service communication link may be referred to as a service packet.

When the ECU is disconnected from the OTA installer, the first indication information is carried on another redundant communication link, for example, the second communication link, to ensure that the ECU receives the first indication information, so that the ECU is triggered to perform the second reset operation. This helps resume the communication between the ECU and the OTA installer based on the first communication link.

Optionally, a quantity of times of performing the second reset operation is associated with a quantity of times of receiving the first indication information by the ECU.

Herein, for example, the association may be as follows: The quantity of times of performing the second reset operation is equal to the quantity of times of receiving the first indication information by the ECU, and each time the ECU receives the first indication information, the ECU performs the second reset operation once based on the first indication information. For example, the association may be as follows: The quantity of times of performing the second reset operation is not less than the quantity of times of receiving the first indication information by the ECU. In other words, the ECU receives the first indication information once, and the first indication information triggers the ECU to perform at least one second reset operation.

Optionally, the first time range is at least one first detection period, and the at least one second reset operation corresponds to the at least one first detection period.

For example, that the at least one second reset operation corresponds to the at least one first detection period means that each second reset operation corresponds to one first detection period, that is, after each second reset operation is performed, there may be one first detection period for monitoring whether there is the first packet from the OTA installer.

In the foregoing implementation, the ECU may sense a detection period. When the ECU is disconnected from the OTA installer, and the foregoing trigger condition is met, the ECU may actively start at least one second reset operation, to implement self-check and self-healing. This helps improve a success rate of updating the ECU.

Optionally, the method further includes: When a quantity of the at least one second reset operation reaches a first threshold, the ECU stops monitoring the first packet on the first communication link.

In the foregoing implementation, a quantity of times of performing the second reset operation is limited, so that electric energy consumption of the ECU in an update process can be reduced.

Optionally, the ECU includes the first partition and the second partition, the first partition is configured to store the first update software, the second partition is configured to store second update software, the second update software is software used before the ECU programs the first update software, and when a quantity of the at least one second reset operation reaches a first threshold, the method further includes: The ECU starts the second update software; and in a second detection period, if the ECU receives the first packet from the OTA installer based on the first communication link, the ECU sends a third packet to the OTA installer based on the first communication link, where the third packet includes the version number of the second update software.

For example, a process in which the ECU switches from the first partition to the second partition to start the second update software may also be referred to as a process in which the ECU performs the rollback operation.

In the foregoing implementation, when the ECU programs the update software in the partition manner, a problem of a disconnection between the ECU and the OTA installer may be resolved by using a policy of first performing the second reset operation and then performing the rollback operation. That is, when the quantity of times of performing the second reset operation by the ECU reaches the first threshold but the communication between the ECU and the OTA installer based on the first communication link is not resumed, the ECU may further perform the rollback operation to try to resume the communication between the ECU and the OTA installer. In this way, the third packet fed back by the ECU after performing the rollback operation can enable the OTA installer to accurately learn an update result of the ECU. This helps improve reliability of updating the entire vehicle.

Optionally, before that the ECU starts the second update software, the method further includes: The ECU receives rollback information sent by the OTA installer, where the rollback information is carried on the second communication link, and the second communication link is different from the first communication link. That the ECU starts the second update software includes: The ECU starts the second update software based on the rollback information.

In a possible implementation, the foregoing process of starting the second update software may also be referred to as performing the rollback operation. That is, that the ECU performs the rollback operation includes: The ECU performs the rollback operation based on the rollback information.

In the foregoing implementation, when the problem of the disconnection between the ECU and the OTA installer is resolved by using the policy of first performing the second reset operation and then performing the rollback operation, the rollback operation performed by the ECU after the second reset operation may be performed based on rollback information sent by the OTA installer through a redundant communication link (for example, the second communication link). This helps improve reliability of updating the entire vehicle.

Optionally, the ECU is communicatively connected to the OTA installer through the distributed gateway in the vehicle, the first communication link includes the diagnostic communication link based on the Ethernet and/or the diagnostic communication link based on the first in-vehicle signal bus, and the second communication link includes:

at least one of a service communication link based on a second in-vehicle signal bus and a service communication link based on the Ethernet; or

a third communication link and a fourth communication link, where the third communication link is configured to connect the OTA installer and the distributed gateway, and the fourth communication link is configured to connect the distributed gateway and the ECU, where

if the diagnostic communication link based on the Ethernet in the first communication link is configured to connect the OTA installer and the distributed gateway, and the diagnostic communication link based on the first in-vehicle signal bus in the first communication link is configured to connect the distributed gateway and the ECU,

when the third communication link is a diagnostic communication link based on any in-vehicle signal bus, the fourth communication link is a diagnostic communication link based on the Ethernet or a diagnostic communication link based on a third in-vehicle signal bus, where the third in-vehicle signal bus is different from the first in-vehicle signal bus; or

when the third communication link is a service communication link based on the Ethernet or any in-vehicle signal bus, the fourth communication link is a service communication link based on the Ethernet or any in-vehicle signal bus.

For example, the distributed gateway may also be referred to as a vehicle integrated unit (vehicle integrated unit, VIU) or a virtual gateway (virtual gateway, VGW).

In the foregoing implementation, various forms of the first communication link and the second communication link are provided in an architecture in which the ECU is communicatively connected to the OTA installer through the distributed gateway, to meet application of the update detection method in various scenarios.

Optionally, the first communication link is the diagnostic communication link based on the Ethernet. The second communication link includes: at least one of the service communication link based on the second in-vehicle signal bus and the service communication link based on the Ethernet; or a diagnostic communication link based on the second in-vehicle signal bus.

Optionally, the first communication link is the diagnostic communication link based on the first in-vehicle signal bus. The second communication link includes at least one of the service communication link based on the second in-vehicle signal bus and the service communication link based on the Ethernet; or at least one of the diagnostic communication link based on the third in-vehicle signal bus and the diagnostic communication link based on the Ethernet, where the third in-vehicle signal bus is different from the first in-vehicle signal bus.

The second in-vehicle signal bus may be the same as or different from the first in-vehicle signal bus.

In the foregoing implementation, examples of the first communication link and the second communication link are not only applicable to a scenario in which the ECU is directly communicatively connected to the OTA installer, but also applicable to a scenario in which the ECU is communicatively connected to the OTA installer through the distributed gateway.

According to a second aspect, this application provides an update detection method. The method includes: An over-the-air OTA installer performs a first operation within a first time range, where the first operation is for resuming communication between the OTA installer and an electronic control unit ECU, and the ECU is an electronic control unit connected to the OTA installer; before the first time range, the OTA installer sends first reset information without receiving a response of the ECU to a first packet, where the first reset information is used to request the ECU to perform a first reset operation, the first reset operation is a 1st reset operation performed by the ECU after the ECU programs first update software, and the first packet is used to request to obtain a version number of update software currently used by the ECU; and within the first time range, if the communication between the ECU and the OTA installer is resumed, the OTA installer receives a second packet that is from the ECU and that is in response to the first packet.

Herein, for the first reset operation, refer to a description of corresponding content in the first aspect.

For example, a reason why the OTA installer does not receive the response of the ECU to the first packet before the first time range includes: Because the ECU is disconnected and does not receive the first packet sent by the OTA installer, the ECU does not send the response to the first packet to the OTA installer. Therefore, the OTA installer does not receive the response of the ECU to the first packet. Alternatively, the ECU first receives the first packet sent by the OTA installer, and sends the response to the first packet to the OTA installer. However, because the ECU is disconnected, the OTA installer does not receive the response of the ECU to the first packet.

For example, before the first time range, when the OTA installer sends the first reset information without receiving the response of the ECU to the first packet, the OTA installer may further determine that the ECU is disconnected from the OTA installer.

In the foregoing method, when the OTA installer sends the first reset information without receiving the response of the ECU to the first packet, the OTA installer performs the first operation within the first time range to check the communication between the disconnected ECU and OTA installer, and monitors, within the first time range, whether the second packet that is from the ECU and that is in response to the first packet exists. In this way, the OTA installer can accurately determine, by using the second packet, whether the ECU is updated to an appropriate version. In a process of unifying version software of an entire vehicle, accuracy of decision-making of the entire vehicle is improved, and reliability of updating the entire vehicle is improved.

Optionally, the first operation includes repeatedly sending the first packet.

For example, repeatedly sending may be understood as: repeatedly sending the first packet at equal interval duration, repeatedly sending the first packet at increasing interval duration, or repeatedly sending the first packet at decreasing interval duration.

It may be understood that before the first time range, the OTA installer does not receive a feedback of the ECU on the first packet, and therefore the OTA installer cannot learn whether the ECU receives the first packet. In this case, within the first time range, when the OTA installer performs the operation of "repeatedly sending the first packet", once the communication between the ECU and the OTA installer is resumed, the ECU can receive the first packet, and the OTA installer can also receive the second packet that is from the ECU and that is in response to the first packet, so that the OTA installer can learn that the communication between the ECU and the OTA installer is resumed. This helps improve a success rate of updating the ECU and the reliability of updating the entire vehicle.

Optionally, the first packet and the second packet are carried on a first communication link, and the first communication link includes a diagnostic communication link based on an Ethernet and/or a diagnostic communication link based on a first in-vehicle signal bus. For the first communication link, refer to a description of corresponding content in the first aspect. Details are not described herein again.

Optionally, the ECU includes a first partition and a second partition, the first partition is configured to store the first update software, the second partition is configured to store second update software, the second update software is software used before the ECU programs the first update software, and the first operation further includes: sending rollback information at least once based on a second communication link, where the rollback information indicates the ECU to start the second update software, and the second communication link is different from the first communication link.

For example, a process in which the ECU starts the second update software may also be referred to as that the ECU performs a rollback operation, that is, it may also be understood as that the rollback information indicates the ECU to perform a rollback operation.

For example, a type of the second communication link is a diagnostic communication link or a service communication link. When the type of the second communication link is a diagnostic communication link, a packet carried on the second communication link may be referred to as a diagnostic packet. When the type of the second communication link is a service communication link, a packet carried on the second communication link may be referred to as a service packet.

In the foregoing implementation, the OTA installer directly uses a rollback policy to resolve an ECU disconnection problem. That is, the OTA installer sends the rollback information at least once based on a redundant communication link other than the first communication link, for example, the second communication link. In this way, it can be ensured that the ECU can receive the rollback information. This helps improve a success rate of resuming the communication between the ECU and the OTA installer based on the first communication link.

Optionally, the first operation further includes: sending first indication information at least once based on a second communication link, where the first indication information indicates that the ECU is disconnected from the OTA installer, or indicates the ECU to perform a second reset operation, and the second communication link is different from the first communication link; or sending a heartbeat packet based on the first communication link.

Herein, the second reset operation is different from the first reset operation, and the second reset operation is a reset operation performed after the first reset operation. In other words, the second reset operation is an added reset operation. The second reset operation is used to re-run or restart the first update software on which OTA programming is performed.

For example, the heartbeat packet indicates that the OTA installer is online or alive. Whether the ECU receives the heartbeat packet may be used as a trigger condition for the ECU to determine whether to perform at least one second reset operation or at least one rollback operation.

In the foregoing implementation, the OTA installer may actively send the first indication information or the heartbeat packet based on the redundant communication link other than the first communication link, for example, the second communication link, to trigger the ECU to perform the at least one second reset operation. This helps resolve the ECU disconnection problem, and helps improve the success rate of updating the ECU.

Optionally, a quantity of times of performing the second reset operation is associated with a quantity of times of sending the first indication information.

For example, the association may be understood as follows: The quantity of times of performing the second reset operation is equal to the quantity of times of sending the first indication information, and each time the OTA installer sends the first indication information, the corresponding ECU performs the second reset operation once based on the first indication information.

For example, the association may alternatively be understood as follows: The quantity of times of performing the second reset operation is greater than the quantity of times of sending the first indication information. For example, the OTA installer sends the first indication information once to trigger the ECU to perform a plurality of second reset operations.

Optionally, the ECU includes a first partition and a second partition, the first partition is configured to store the first update software, the second partition is configured to store second update software, the second update software is software used before the ECU programs the first update software, and the first operation further includes: when the quantity of times of sending the first indication information reaches a first threshold and the communication between the ECU and the OTA installer is not resumed, sending, by the OTA installer, rollback information to the ECU based on the second communication link, where the rollback information indicates the ECU to start the second update software, and the second communication link is different from the first communication link.

For example, after the quantity of times of sending the first indication information reaches the first threshold, a quantity of times of sending the rollback information is less than or equal to a second threshold.

In the foregoing implementation, if the ECU has a partition that stores software of an earlier version, the OTA installer may resolve the ECU disconnection problem by using a reset before rollback policy. That is, when the quantity of times of sending the first indication information by the OTA installer reaches the first threshold, but the ECU disconnection problem is not resolved, the rollback information can still be sent to the ECU through the redundant communication link. In this way, a success rate of resuming the communication between the ECU and the OTA installer based on the first communication link can be improved.

Optionally, after the OTA installer receives the second packet, the method further includes: determining an update result of the ECU based on the second packet.

Further, the determining an update result of the ECU based on the second packet includes: If a version number included in the second packet is the same as a version number of the first update software, the OTA installer determines that the ECU is successfully updated; or if a version number included in the second packet is different from a version number of the first update software, the OTA installer determines that the ECU fails to be updated.

In the foregoing implementation, the OTA installer may determine the update result of the ECU based on the second packet. In this manner, the OTA installer may summarize update results of all mounted ECUs, and can accurately determine whether an ECU performs update or rollback when a software version used by the entire vehicle is unified. For example, in a process of updating the entire vehicle, an ECU 1 is successfully updated, but an ECU 2 fails to be updated (that is, successfully rolls back). In this case, to ensure a unified software version, the ECU 2 may be indicated to update again or the ECU 1 may be indicated to roll back (that is, start the software of the earlier version, for example, software of a second version). In this way, proper running of a service in a working environment matching the software version can be implemented, and this helps improve the reliability of updating the entire vehicle.

Optionally, after the determining that the ECU fails to be updated, the method further includes: sending update indication information to the ECU, where the update indication information indicates the ECU to re-perform OTA update based on the first update software.

In the foregoing implementation, when the communication between the ECU and the OTA installer is resumed, the OTA installer sends the update indication information to the ECU. This can improve the success rate of updating the ECU.

Optionally, if the OTA installer does not receive the second packet within the first time range, the method further includes: The OTA installer sends feedback information to an OTA manager, where the feedback information indicates that the ECU is disconnected from the OTA installer.

In the foregoing implementation, the OTA installer may further send the feedback information to the OTA manager to notify that the ECU is disconnected, so that the OTA manager tries to resolve the ECU disconnection problem from a perspective of the entire vehicle, for example, entire vehicle detection. This helps improve the success rate of updating the ECU and the reliability of updating the entire vehicle.

For beneficial effects of the following technical features, refer to the descriptions of beneficial effects of the same technical features in the first aspect. Details are not described herein again.

Optionally, the ECU is communicatively connected to the OTA installer through a distributed gateway in the vehicle, the first communication link includes the diagnostic communication link based on the Ethernet and/or the diagnostic communication link based on the first in-vehicle signal bus, and the second communication link includes:

at least one of a service communication link based on a second in-vehicle signal bus and a service communication link based on the Ethernet; or

a third communication link and a fourth communication link, where the third communication link is configured to connect the OTA installer and the distributed gateway, and the fourth communication link is configured to connect the distributed gateway and the ECU, where

if the diagnostic communication link based on the Ethernet in the first communication link is configured to connect the OTA installer and the distributed gateway, and the diagnostic communication link based on the first in-vehicle signal bus in the first communication link is configured to connect the distributed gateway and the ECU,

when the third communication link is a diagnostic communication link based on any in-vehicle signal bus, the fourth communication link is a diagnostic communication link based on the Ethernet or a diagnostic communication link based on a third in-vehicle signal bus, where the third in-vehicle signal bus is different from the first in-vehicle signal bus; or

when the third communication link is a service communication link based on the Ethernet or any in-vehicle signal bus, the fourth communication link is a service communication link based on the Ethernet or any in-vehicle signal bus.

Optionally, the first communication link is the diagnostic communication link based on the Ethernet. The second communication link includes: at least one of the service communication link based on the second in-vehicle signal bus and the service communication link based on the Ethernet; or a diagnostic communication link based on the second in-vehicle signal bus.

Optionally, the first communication link is the diagnostic communication link based on the first in-vehicle signal bus. The second communication link includes at least one of the service communication link based on the second in-vehicle signal bus and the service communication link based on the Ethernet; or at least one of the diagnostic communication link based on the third in-vehicle signal bus and the diagnostic communication link based on the Ethernet, where the third in-vehicle signal bus is different from the first in-vehicle signal bus.

According to a third aspect, this application provides an update detection method. The method includes: An over-the-air OTA manager receives feedback information sent by an OTA installer, where the feedback information indicates that an electronic control unit ECU is disconnected from the OTA installer; and the OTA manager sends power-off indication information, where the power-off indication information is used by the ECU to perform a second reset operation, the second reset operation is a reset operation performed after the ECU performs a first reset operation, and the first reset operation is a 1$^{st}$ reset operation performed by the ECU after the ECU programs first update software.

Herein, the OTA manager (OTA Manager) may also be referred to as an OTA manager or an OTA controller (OTA Controller). For example, the OTA manager is mainly configured to connect to a cloud device to implement management of an entire vehicle.

Herein, the OTA installer may be understood as an executor or an execution unit of the OTA manager. The OTA installer may be, for example, an ECU Master. The OTA installer is configured to install, roll back, and reset OTA software for the ECU. The OTA installer may be deployed on a specific component in the vehicle, for example, a domain controller, to update an ECU mounted to the domain controller.

For example, when the OTA installer uses a unified diagnostic service (unified diagnostic service, UDS), the OTA installer may also be referred to as a UDS installer.

Herein, a deployment manner of the OTA manager and the OTA installer may be as follows: In the vehicle, the OTA manager and the OTA installer may be deployed on a same domain controller, or may be separately deployed on different domain controllers. Herein, the OTA manager and the OTA installer may exist independently, or the OTA installer may be integrated into the OTA manager. This is not specifically limited herein.

In the foregoing method, in response to the feedback information sent by the OTA installer, the OTA manager sends the power-off indication information, to control the entire vehicle to be powered off and hibernated for a period of time and then be powered on again. In this way, the ECU additionally performs the second reset operation after performing the first reset operation, to retry to start or run update software of a new version, and try to resolve an ECU disconnection problem from a perspective of the entire vehicle. This helps improve a success rate of resuming communication between the ECU and the OTA installer, and is also conducive to reliability of updating the entire vehicle.

Optionally, after that the OTA manager sends power-off indication information, the method further includes: The OTA manager receives, within preset duration, result information sent by the OTA installer, where the result information indicates an update result of the ECU, and the result information is a response to result query information sent by the OTA manager; and the OTA manager obtains the update result of the ECU based on the result information.

In the foregoing implementation, the OTA manager may learn the update result of the ECU based on the result information. In this method, the OTA manager can accurately learn an update result of each ECU of the entire vehicle, and can accurately determine whether an ECU performs update or rollback when a software version used by the entire vehicle is unified. For example, in a process of updating the entire vehicle, an ECU 1 is successfully updated, but an ECU 2 fails to be updated (that is, successfully rolls back). In this case, to ensure a unified software version, the ECU 2 may be indicated to update again or the ECU 1 may be indicated to roll back. In this way, proper running of a service in a working environment matching the software version can be implemented.

Optionally, the method further includes: Within the preset duration, if the OTA manager does not receive the result information, the OTA manager prompts a user of the vehicle that the ECU is disconnected from the OTA installer, and requests manual processing.

For example, the user of the vehicle may be one or more of a driver of the vehicle, a user of the vehicle, an owner of the vehicle, a passenger in the vehicle, and the like.

In the foregoing implementation, when the ECU disconnection still cannot be resolved by performing a power-on/off operation of the entire vehicle, the OTA manager may further request manual processing from the user of the vehicle.

According to a fourth aspect, this application provides an update detection apparatus. The apparatus is an electronic control unit ECU or is included in an ECU, and the apparatus includes a receiving unit, a processing unit, and a sending unit. Within a first time range, the receiving unit receives a first packet sent by an over-the-air OTA installer, and the sending unit sends a second packet to the OTA installer in response to the first packet, where the first packet is used to request to obtain a version number of update software currently used by the ECU; before the first time range, the processing unit performs a first reset operation, and the ECU is disconnected from the OTA installer, where the first reset operation is a 1$^{st}$ reset operation performed by the processing unit after the processing unit programs first update software; and within the first time range and before the receiving unit receives the first packet, the processing unit performs at least one second reset operation or at least one rollback operation.

Optionally, the first packet and the second packet are carried on a first communication link, and the first communication link includes a diagnostic communication link based on an Ethernet and/or a diagnostic communication link based on a first in-vehicle signal bus.

Optionally, within the first time range and before the ECU receives the first packet, when the ECU performs the at least one second reset operation, the second packet includes a version number of the first update software.

Optionally, within the first time range and before the ECU receives the first packet, when the ECU performs the at least one rollback operation, the second packet includes a version number of second update software. The second update software is software used before the ECU programs the first update software.

Optionally, a trigger condition for the ECU to perform the at least one second reset operation is as follows:

within first preset duration after the ECU starts the first update software, the ECU does not receive the first packet sent by the OTA installer;

within second preset duration after the ECU starts the first update software, the ECU does not receive a heartbeat packet sent by the OTA installer;

the ECU receives first indication information, where the first indication information indicates that the ECU is disconnected from the OTA installer, or indicates the ECU to start performing the second reset operation; or

the ECU receives power-off indication information, where the power-off indication information is used by the ECU to perform the second reset operation.

For example, a trigger condition for the ECU to perform the at least one rollback operation is as follows:

(1) within first preset duration after the ECU starts the first update software, the ECU does not receive the first packet sent by the OTA installer;

(2) within second preset duration after the ECU starts the first update software, the ECU does not receive a heartbeat packet sent by the OTA installer; or

(3) the ECU receives second indication information, where the second indication information indicates that the ECU is disconnected from the OTA installer, or indicates the ECU to start performing the rollback operation.

Optionally, the first indication information is carried on a second communication link, and the second communication link is different from the first communication link.

Optionally, a quantity of times of performing the second reset operation is associated with a quantity of times of receiving the first indication information by the ECU.

Optionally, the first time range is at least one first detection period, and the at least one second reset operation corresponds to the at least one first detection period.

Optionally, the processing unit is further configured to: when a quantity of the at least one second reset operation reaches a first threshold, stop monitoring the first packet on the first communication link.

Optionally, the ECU includes a first partition and a second partition, the first partition is configured to store the first update software, the second partition is configured to store the second update software, the second update software is software used before the ECU programs the first update software, and when the quantity of the at least one second reset operation reaches the first threshold, the processing unit is further configured to start the second update software; and in a second detection period, if the receiving unit receives the first packet from the OTA installer based on the first communication link, the sending unit is further configured to send a third packet to the OTA installer based on the first communication link, where the third packet includes the version number of the second update software.

Optionally, the receiving unit is further configured to receive rollback information sent by the OTA installer, where the rollback information is carried on the second communication link, and the second communication link is different from the first communication link; and the processing unit is specifically configured to start the second update software based on the rollback information.

Optionally, the ECU is communicatively connected to the OTA installer through a distributed gateway in a vehicle, the first communication link includes the diagnostic communication link based on the Ethernet and/or the diagnostic communication link based on the first in-vehicle signal bus, and the second communication link includes:

at least one of a service communication link based on a second in-vehicle signal bus and a service communication link based on the Ethernet; or

a third communication link and a fourth communication link, where the third communication link is configured to connect the OTA installer and the distributed gateway, and the fourth communication link is configured to connect the distributed gateway and the ECU, where

if the diagnostic communication link based on the Ethernet in the first communication link is configured to connect the OTA installer and the distributed gateway, and the diagnostic communication link based on the first in-vehicle signal bus in the first communication link is configured to connect the distributed gateway and the ECU,

when the third communication link is a diagnostic communication link based on any in-vehicle signal bus, the fourth communication link is a diagnostic communication link based on the Ethernet or a diagnostic communication link based on a third in-vehicle signal bus, where the third in-vehicle signal bus is different from the first in-vehicle signal bus; or

when the third communication link is a service communication link based on the Ethernet or any in-vehicle signal bus, the fourth communication link is a service communication link based on the Ethernet or any in-vehicle signal bus.

Optionally, the first communication link is the diagnostic communication link based on the Ethernet. The second communication link includes: at least one of the service communication link based on the second in-vehicle signal bus and the service communication link based on the Ethernet; or a diagnostic communication link based on the second in-vehicle signal bus.

Optionally, the first communication link is the diagnostic communication link based on the first in-vehicle signal bus. The second communication link includes at least one of the service communication link based on the second in-vehicle signal bus and the service communication link based on the Ethernet; or at least one of the diagnostic communication link based on the third in-vehicle signal bus and the diagnostic communication link based on the Ethernet, where the third in-vehicle signal bus is different from the first in-vehicle signal bus.

According to a fifth aspect, this application provides an update detection apparatus. The apparatus is an over-the-air OTA installer or is included in an OTA installer, and the apparatus includes a sending unit and a receiving unit. Within a first time range, the sending unit is configured to perform a first operation, where the first operation is for resuming communication between the OTA installer and an electronic control unit ECU, and the ECU is an electronic control unit connected to the OTA installer; before the first time range, the sending unit is configured to send first reset information, and the receiving unit does not receive a response of the ECU to a first packet, where the first reset information is used to request the ECU to perform a first reset operation, the first reset operation is a 1st reset operation performed by the ECU after the ECU programs first update software, and the first packet is used to request to obtain a version number of update software currently used by the ECU; and within the first time range, if the communication between the ECU and the OTA installer is resumed, the receiving unit receives a second packet that is from the ECU and that is in response to the first packet.

Optionally, the first operation includes repeatedly sending the first packet.

Optionally, the first packet and the second packet are carried on a first communication link, and the first communication link includes a diagnostic communication link based on an Ethernet and/or a diagnostic communication link based on a first in-vehicle signal bus.

Optionally, the ECU includes a first partition and a second partition, the first partition is configured to store the first update software, the second partition is configured to store second update software, the second update software is software used before the ECU programs the first update software, and the first operation further includes: sending rollback information at least once based on a second communication link, where the rollback information indicates the ECU to start the second update software, and the second communication link is different from the first communication link.

Optionally, the first operation further includes: sending first indication information at least once based on a second communication link, where the first indication information indicates that the ECU is disconnected from the OTA installer, or indicates the ECU to perform a second reset operation, and the second communication link is different from the first communication link; or sending a heartbeat packet based on the first communication link.

Optionally, a quantity of times of performing the second reset operation is associated with a quantity of times of sending the first indication information.

Optionally, the ECU includes the first partition and the second partition, the first partition is configured to store the first update software, the second partition is configured to store the second update software, the second update software is software used before the ECU programs the first update software, and the first operation further includes: when the quantity of times of sending the first indication information reaches a first threshold and the communication between the ECU and the OTA installer is not resumed, sending, by the OTA installer, rollback information to the ECU based on the second communication link, where the rollback information indicates the ECU to start the second update software, and the second communication link is different from the first communication link.

Optionally, after the OTA installer receives the second packet, the apparatus further includes a processing unit, and the processing unit is configured to determine an update result of the ECU based on the second packet.

Further, the processing unit is specifically configured to: if a version number included in the second packet is the same as a version number of the first update software, the OTA installer determines that the ECU is successfully updated; or if a version number included in the second packet is different from a version number of the first update software, the OTA installer determines that the ECU fails to be updated.

Optionally, after the processing unit determines that the ECU fails to be updated, the sending unit is further configured to send update indication information to the ECU, where the update indication information indicates the ECU to re-perform OTA update based on the first update software.

Optionally, within the first time range, if the receiving unit does not receive the second packet, the sending unit is further configured to send feedback information to an OTA manager, where the feedback information indicates that the ECU is disconnected from the OTA installer.

Optionally, the ECU is communicatively connected to the OTA installer through a distributed gateway in a vehicle, the first communication link includes the diagnostic communication link based on the Ethernet and/or the diagnostic communication link based on the first in-vehicle signal bus, and the second communication link includes:

at least one of a service communication link based on a second in-vehicle signal bus and a service communication link based on the Ethernet; or

a third communication link and a fourth communication link, where the third communication link is configured to connect the OTA installer and the distributed gateway, and the fourth communication link is configured to connect the distributed gateway and the ECU, where

if the diagnostic communication link based on the Ethernet in the first communication link is configured to connect the OTA installer and the distributed gateway, and the diagnostic communication link based on the first in-vehicle signal bus in the first communication link is configured to connect the distributed gateway and the ECU,

when the third communication link is a diagnostic communication link based on any in-vehicle signal bus, the fourth communication link is a diagnostic communication link based on the Ethernet or a diagnostic communication link based on a third in-vehicle signal bus, where the third in-vehicle signal bus is different from the first in-vehicle signal bus; or

when the third communication link is a service communication link based on the Ethernet or any in-vehicle signal bus, the fourth communication link is a service communication link based on the Ethernet or any in-vehicle signal bus.

Optionally, the first communication link is the diagnostic communication link based on the Ethernet. The second communication link includes: at least one of the service communication link based on the second in-vehicle signal bus and the service communication link based on the Ethernet; or a diagnostic communication link based on the second in-vehicle signal bus.

Optionally, the first communication link is the diagnostic communication link based on the first in-vehicle signal bus. The second communication link includes at least one of the service communication link based on the second in-vehicle signal bus and the service communication link based on the Ethernet; or at least one of the diagnostic communication link based on the third in-vehicle signal bus and the diagnostic communication link based on the Ethernet, where the third in-vehicle signal bus is different from the first in-vehicle signal bus.

According to a sixth aspect, this application provides an update detection apparatus. The apparatus is an over-the-air OTA manager or is included in an OTA manager, and the apparatus includes a receiving unit and a sending unit. The receiving unit receives feedback information sent by an OTA installer, where the feedback information indicates that an electronic control unit ECU is disconnected from the OTA installer; and the sending unit is configured to send power-off indication information, where the power-off indication information is used by the ECU to perform a second reset operation, the second reset operation is a reset operation performed after the ECU performs a first reset operation, and the first reset operation is a $1^{st}$ reset operation performed by the ECU after the ECU programs first update software.

Optionally, within preset duration after the sending unit sends the power-off indication information, the receiving unit receives result information sent by the OTA installer, where the result information indicates an update result of the ECU, and the result information is a response to result query information sent by the sending unit. The apparatus further includes a processing unit, and the processing unit is configured to obtain the update result of the ECU based on the result information.

Optionally, within the preset duration, if the receiving unit does not receive the result information, the processing unit is further configured to: prompt a user of a vehicle that the ECU is disconnected from the OTA installer, and request manual processing.

According to a seventh aspect, this application provides a chip. The chip includes at least one processor and a communication interface. The communication interface is configured to provide an information input and/or output for the at least one processor. The chip is configured to implement the method according to any one of the first aspect or the possible implementations of the first aspect, or the chip is configured to implement the method according to any one of the second aspect or the possible implementations of the second aspect, or the chip is configured to implement the method according to any one of the third aspect or the possible implementations of the third aspect.

According to an eighth aspect, this application provides an electronic control unit. The electronic control unit is configured to implement the method according to any one of the first aspect or the possible implementations of the first aspect.

Further, the electronic control unit may be the apparatus according to any one of the fourth aspect or the possible implementations of the fourth aspect, or may be the chip in the seventh aspect.

According to a ninth aspect, this application provides an update detection system. The update detection system includes a first apparatus and a second apparatus, or includes a first apparatus, a second apparatus, and a third apparatus. The first apparatus is configured to implement the method according to any one of the first aspect or the possible implementations of the first aspect, the second apparatus is configured to implement the method according to any one of the second aspect or the possible implementations of the second aspect, and the third apparatus is configured to implement the method according to any one of the third aspect or the possible implementations of the third aspect.

According to a tenth aspect, this application provides a vehicle. The vehicle includes the apparatus according to at least one of the fourth aspect, the fifth aspect, and the sixth aspect, or includes the chip according to the seventh aspect, or includes the electronic control unit according to the eighth aspect, or includes the update detection system according to the ninth aspect.

According to an eleventh aspect, this application provides a computer-readable storage medium, including computer instructions. When the computer instructions are run by a processor, the method according to any one of the first aspect or the possible implementations of the first aspect is implemented, or the method according to any one of the second aspect or the possible implementations of the second aspect is implemented, or the method according to any one of the third aspect or the possible implementations of the third aspect is implemented.

According to a twelfth aspect, this application provides a computer program product. When the computer program product is executed by a processor, the method according to any one of the first aspect or the possible implementations of the first aspect is implemented, or the method according to any one of the second aspect or the possible implementations of the second aspect is implemented, or the method according to any one of the third aspect or the possible implementations of the third aspect is implemented.

For example, the computer program product is a software installation package.

## BRIEF DESCRIPTION OF DRAWINGS

FIG. 1 is a diagram of an architecture of an update detection system according to an embodiment of this application;
FIG. 2 is a flowchart of an update detection method according to an embodiment of this application;
FIG. 3 is a flowchart of another update detection method according to an embodiment of this application;
FIG. 4 is a flowchart of still another update detection method according to an embodiment of this application;
FIG. 5 is a flowchart of yet another update detection method according to an embodiment of this application;
FIG. 6 is a diagram of a structure of an update detection apparatus according to an embodiment of this application;
FIG. 7 is a diagram of a structure of another update detection apparatus according to an embodiment of this application;
FIG. 8 is a diagram of a structure of still another update detection apparatus according to an embodiment of this application; and
FIG. 9 is a diagram of a structure of a communication device according to an embodiment of this application.

## DESCRIPTION OF EMBODIMENTS

It should be noted that prefix words such as "first" and "second" used in this application are merely used to distinguish between different described objects, and do not limit positions, a sequence, priorities, a quantity, or content of the described objects. For example, if the described object is a "field", ordinal numbers before the "field" in a "first field" and a "second field" do not limit positions or a sequence between the "fields". The "first" and "second" do not limit whether the modified "fields" are in a same message, nor do they limit a sequence of the "first field" and the "second field". For another example, if the described object is a "level", ordinal numbers before the "level" in a "first level" and a "second level" do not limit priorities between the "levels". For another example, a quantity of described objects is not limited by a prefix word, and may be one or more. A "first device" is used as an example, and a quantity of "devices" may be one or more. In addition, objects modified by different prefix words may be the same or different. For example, if the described object is a "device", a "first device" and a "second device" may be a same device, devices of a same type, or devices of different types. For another example, if the described object is "information", "first information" and "second information" may be information of same content or information of different content. In conclusion, use of a prefix word used to distinguish between the described objects in embodiments of this application does not constitute a limitation on the described objects. For descriptions of the described objects, refer to the context descriptions in the claims or embodiments, and the use of such a prefix word should not constitute a redundant limitation.
It should be noted that a description like "at least one item (or at least one) of a1, a2, ..., and an" used in embodiments of this application includes a case in which any one of a1, a2, ..., and an exists independently, and also includes a case in which any combination of any plurality of a1, a2, ..., and an exists, where each case may exist independently. For example, a description of "at least one of a, b, and c" includes a case of a, b, c, a combination of a and b, a combination of a and c, a combination of b and c, or a combination of a, b, and c.
For ease of understanding, the following first describes related terms that may be used in embodiments of this application.

(1) Ethernet-based diagnostic communication DOIP

Ethernet-based diagnostic communication over internet protocol (diagnostic communication over internet protocol, DOIP) means an Ethernet-based communication protocol transmits data of a unified diagnostic service (unified diagnostic service, UDS) protocol. DOIP features high throughput, fast response, and remote diagnosis through an Ethernet, and is widely used in the vehicle-mounted field. For example, DOIP may be used for programming an electronic control unit ECU when a vehicle performs OTA update.

(2) Rollback operation

An OTA software programming solution mainly includes a partitioning manner and a non-partitioning manner.
In the partitioning manner, the update software is programmed in an A/B partition manner. That is, two areas are obtained through division in a memory, and are respectively referred to as an area A and an area B. One area is used to store update software of a new version, and the other area is used to store update software of an earlier version.
It is assumed that the area A stores the software of the earlier version, and the current ECU obtains the software of the new version. In this case, the ECU programs the software of the new version to the area B. After the programming is completed, the ECU switches to the area B to start the software of the new version. When the software of the new version is abnormal, the ECU can perform a rollback operation to return to the area A to start the software of the earlier version, to ensure normal use of the ECU.

In the non-partitioning manner, before programming the software of the new version, the ECU needs to enter a bootloader program to erase the software of the earlier version. It may be understood that in this manner, when the software of the new version is abnormal, the ECU cannot perform a rollback operation because the software of the earlier version has been erased.

(3) ECU update process

During OTA update in the vehicle-mounted field, update software on an ECU side is usually programmed according to programming specifications defined by a unified diagnostic service UDS. For example, a specific procedure is as follows:

Step 1: In a pre-programming phase, the ECU prepares for programming.

Step 2: In a programming phase, the ECU programs update software sent by an OTA installer (for example, by using the UDS), and performs integrity verification after completing programming.

Step 3: In a post-pre-programming phase, the ECU performs a reset operation based on reset information sent by the OTA installer and starts newly installed update software.

Step 4: The OTA installer obtains a version number of a currently used update software from the ECU. If the version number is a version number of the newly installed update software, it is determined that the ECU completes an entire update process, and therefore the ECU is successfully updated.

It may be understood that in Step 4, if the ECU is disconnected from the OTA installer, the OTA installer cannot obtain the version number of the newly installed update software from the ECU, and therefore cannot determine whether the ECU software runs normally. In this case, it is considered that the ECU fails to be updated.

The following describes technical solutions of this application with reference to accompanying drawings.

FIG. 1 is a diagram of an architecture of an update detection system according to an embodiment of this application. As shown in FIG. 1, the system is deployed on a vehicle. The system includes an OTA manager, an OTA installer, a distributed gateway, and an electronic control unit (electronic control unit, ECU). The OTA manager and the OTA installer may also be referred to as an update control system.

Herein, the OTA manager (OTA Manager) may also be referred to as an OTA manager or an OTA controller (OTA Controller). For example, the OTA manager is mainly configured to connect to a cloud device to implement management of an entire vehicle.

Herein, the OTA installer may be understood as an executor or an execution unit of the OTA manager. The OTA installer may be, for example, an ECU Master. The OTA installer is configured to install, roll back, and reset OTA software for the ECU. The OTA installer may be deployed on a specific component in the vehicle, for example, a domain controller, to update an ECU mounted to the domain controller.

In an implementation, the OTA installer may directly communicate with a mounted ECU based on indication information delivered by the OTA manager, or communicate with each ECU in the vehicle through the distributed gateway, to obtain one or more pieces of information of software, firmware, and hardware of each ECU, and receive information returned by each ECU to the OTA installer.

For example, when the OTA installer uses a unified diagnostic service (unified diagnostic service, UDS), the OTA installer may also be referred to as a UDS installer.

Herein, a deployment manner of the OTA manager and the OTA installer may be as follows: In the vehicle, the OTA manager and the OTA installer may be deployed on a same domain controller, or may be separately deployed on different domain controllers. Herein, the OTA manager and the OTA installer may exist independently, or the OTA installer may be integrated into the OTA manager. This is not specifically limited herein. For example, there is one OTA manager, and a quantity of OTA installers is related to a quantity of domain controllers in the vehicle.

For example, the domain controller includes but is not limited to one or more of the following: an integrated software and hardware platform used to support intelligent driving, namely, an onboard computing platform, for example, a mobile data center (mobile data center, MDC); an integrated software and hardware platform used to support body control and chassis control, for example, a vehicle domain controller (vehicle domain controller, VDC); an integrated software and hardware platform used to provide an in-vehicle multimedia service (for example, at least one of a head-up display, a dashboard display, and an entertainment audio and video), for example, a cockpit domain controller (cockpit domain controller, CDC) and a central computing unit; and the like.

In some possible embodiments, the MDC may also be referred to as an advanced driving assistance system domain controller (advanced driving assistance system domain controller, ADAS DC) or an automatic drive domain controller (automatic drive domain controller, AD DC), or may be an integrated software and hardware platform used to support body control and chassis control, or the like.

In FIG. 1, the OTA installer communicates with the distributed gateway through an Ethernet or an in-vehicle signal bus, and the distributed gateway communicates with the ECU through the Ethernet or the in-vehicle signal bus. It may be understood that the ECU may communicate with the OTA installer through the distributed gateway.

Herein, the in-vehicle signal bus refers to an in-vehicle signal bus other than the Ethernet. For example, the in-vehicle signal bus includes at least one of a controller area network (controller area network, CAN) bus, a local interconnect network (local interconnect network, LIN) bus, a FlexRay bus, a CAN flexible data-rate (CAN flexible data-rate, CAN FD), and a SparkLink cable.

The distributed gateway is also referred to as a vehicle integrated unit (vehicle integrated unit, VIU) or a virtual gateway (virtual gateway, VGW). The VIU is configured to manage an electronic control unit (electronic control unit, ECU) in an area where the VIU is located. The VIU can be connected to a corresponding sensor, executor, or ECU to implement functions such as power supply, electronic fuse, and I/O port isolation. In addition, the VIU has a part of or all functions of a gateway, for example, a protocol conversion function, a protocol encapsulation and forwarding function, and a data format conversion function. When the VIU integrates ECU functions of a part of vehicle components, the VIU further has electronic control functions, and may provide a part of or all data processing functions and/or control functions for at least one vehicle component. In some possible embodiments, the VIU further has a function of processing data across vehicle components, for example, performing calculation on data obtained from executors of a plurality of vehicle components.

The ECU may also be referred to as a vehicle-mounted computer, an on-board computer, or the like. The ECU is configured to control a status of the vehicle and implement various functions. Depending on different functions, the ECU in the vehicle includes but is not limited to at least one of the following: an engine management system (engine management system, EMS), a transmission control unit (transmission control unit, TCU), an electronic stability program (electronic stability program, ESP), a battery management system (battery management system, BMS), a motor control unit (motor control unit, MCU), a vehicle control unit (vehicle control unit, VCU), an anti-lock brake system (anti-lock brake system, ABS), a driving assistance control unit, a body control module (body control module, BCM), a seat ECU, a trunk ECU, an entertainment video and audio head unit, and the like.

For example, after the ECU in FIG. 1 completes programming of software of a new version, performs reset based on reset information sent by the OTA installer, and starts the software of the new version, if the ECU is disconnected from the OTA installer, that is, the ECU and the OTA installer cannot receive a message from each other on a preset diagnostic communication link, the OTA installer cannot obtain a version number of the software of the new version installed on the ECU. Based on the update detection system shown in FIG. 1, embodiments of this application provide a plurality of update detection methods to try to resume communication between the ECU and the OTA installer, so as to improve a success rate of updating the ECU as much as possible, and also help improve reliability of OTA update of an entire vehicle. For details about each update detection method herein, refer to the descriptions of the following method embodiments. Details are not described herein again.

Based on different power sources of vehicles, the vehicle may be, for example, a new energy vehicle or a conventional vehicle. The conventional vehicle refers to a fuel vehicle, for example, a gasoline vehicle or a diesel vehicle. The new energy vehicle may be, for example, an electric vehicle (electric vehicle, EV), a hybrid electric vehicle (hybrid electric vehicle, HEV), a range extended electric vehicle (range extended EV), a plug-in hybrid electric vehicle (Plug-in HEV), a fuel cell vehicle, or another new energy vehicle. This is not specifically limited herein.

The update detection system shown in FIG. 1 may be applied to any one of a fully autonomous driving scenario (that is, an autonomous driving system performs all operations and a natural driver does not participate in decision-making and operating), a man-machine co-driving scenario (that is, the autonomous driving system and the natural driver work together to complete driving-related operations), and a man-driving scenario (that is, the natural driver performs all driving operations).

The update detection system shown in FIG. 1 may be applied to a plurality of network types, for example, applied to one or more of the following network types: SparkLink (SparkLink), a long term evolution (long term evolution, LTE) network, a 5th generation mobile communication technology (5th generation mobile communication technology, 5G), a wireless local area network (for example, Wi-Fi), Bluetooth (Bluetooth, BT), Zigbee (Zigbee), or an in-vehicle short-range wireless communication network.

It should be noted that FIG. 1 is merely an example of an architectural diagram, but a quantity of network elements included in the system shown in FIG. 1 is not limited. In addition to functional entities shown in FIG. 1, another functional entity may be included in FIG. 1 although it is not shown in FIG. 1. In addition, the method provided in embodiments of this application may be applied to the update detection system shown in FIG. 1. Certainly, the method provided in embodiments of this application may alternatively be applied to another system. This is not limited in embodiments of this application.

FIG. 2 is a flowchart of an update detection method according to an embodiment of this application.

The method shown in FIG. 2 may be applied between a first device and an ECU. For example, the first device is the foregoing OTA installer. That is, the method is applied between the OTA installer and the ECU. However, in embodiments of this application, the first device is not limited to only the OTA installer. For example, the first device may alternatively be an OTA installer using a UDS service, namely, a UDS installer, or may be an OTA manager integrated with an OTA installer, or may be a domain controller integrated with an OTA installer.

In some possible embodiments, when the first device and the ECU are not directly connected through an Ethernet or an in-vehicle signal bus, the method shown in FIG. 2 may alternatively be applied to a communication system including the first device, a distributed gateway, and the ECU. The ECU communicates with the first device through the distributed gateway.

The method includes but is not limited to the following steps.

S201: Before a first time range, the ECU performs a first reset operation, and the ECU is disconnected from the OTA installer.

Herein, first update software is the latest update software installed on or programmed by the ECU. Programming means burning a software program (for example, the first update software) to a specific address of a memory of an ECU chip.

The first reset operation is a 1st reset operation performed by the ECU after the ECU programs the first update software. The first reset operation is performed by the ECU based on first reset information sent by the OTA installer. It may be understood that, the first reset operation is a reset operation in a conventional ECU update procedure. To be specific, after the OTA installer learns that the ECU completes programming of the first update software, the OTA installer sends the first reset information to the ECU, to indicate the ECU to perform the first reset operation.

Herein, the first reset information is carried on a first communication link. If the ECU can receive the first reset information, it indicates that the ECU is not disconnected from the OTA installer when the OTA installer sends the first reset information.

Herein, in an ECU update process, information exchanged between the OTA installer and the ECU is carried on the first communication link. For example, the first communication link is used to carry a diagnostic packet sent by the OTA installer and a response packet of the ECU for the diagnostic packet. Herein, that the ECU is disconnected from the OTA installer means that the ECU cannot communicate with the OTA installer. Specifically, the ECU cannot receive information sent by the OTA installer to the ECU based on the first communication link, and the OTA installer cannot receive information sent by the ECU to the OTA installer based on the first communication link.

For example, a type of the first communication link is a diagnostic communication link. In other words, a packet carried on the first communication link may be referred to as a diagnostic packet.

For example, a reason why the ECU is disconnected from the OTA installer includes that at least one of the following faults occurs on an ECU side:

the first communication link fails to be established after the software is updated;

an OTA protocol stack has a bug after the software is updated, making a diagnostic function ineffective and leading to a disconnection from the OTA installer; and

after the software is updated, hibernation and wakeup functions are abnormal, and the ECU cannot wake up communication functions after performing a reset operation.

In other words, in this embodiment of this application, because at least one of the foregoing faults occurs on the ECU side, the ECU is disconnected from the OTA installer in the ECU update process.

Herein, at least one of the OTA installer and the ECU can sense that the ECU is disconnected from the OTA installer. For example, the ECU may sense that the ECU is disconnected from the OTA installer, and trigger a self-check and self-healing procedure of the ECU. For details, refer to the update detection method shown in the following embodiment in FIG. 3. For another example, after sensing that the ECU is disconnected, the OTA installer may send related indication information by using a redundant communication mechanism to try to resume communication between the ECU and the OTA installer. For details, refer to the update detection method shown in the following embodiment in FIG. 4. Details are not described herein again.

S202: The OTA installer performs a first operation within the first time range.

In this embodiment of this application, the first operation is used to resume the communication between the OTA installer and the ECU. Specifically, the first operation is used to resume the communication between the OTA installer and the ECU based on the first communication link.

For example, a trigger condition for the OTA installer to perform S202 may be that the OTA installer determines that the ECU is disconnected from the OTA installer. Specifically, before the first time range, the OTA installer sends the first reset information to the ECU, and after receiving a response of the ECU to the first reset information, the OTA installer sends a first packet to the ECU for the first time. The first packet is used to request to obtain a version number of update software currently used by the ECU. If the OTA installer does not receive a response of the ECU to the first packet within preset duration, the OTA installer determines that the ECU is disconnected from the OTA installer. Herein, the first packet is carried on the first communication link.

For example, the first time range may indicate a continuous period of time after the ECU is disconnected from the OTA installer. The first time range may be represented by using two absolute moments, or may be represented by using a start moment and duration. For example, the start moment may be an occurrence moment corresponding to the disconnection between the ECU and the OTA installer.

For the OTA installer, the start moment of the first time range may be a moment at which the OTA installer determines that the ECU is disconnected from the OTA installer, or may optionally be a moment at which the OTA installer sends the first reset information, or may be a moment at which the OTA installer sends the first packet for the first time after sending the first reset information.

In this embodiment of this application, the first operation includes: repeatedly sending the first packet to the ECU. Herein, before the first time range, because the OTA installer does not receive the response of the ECU to the first packet after sending the first reset information to the ECU, the OTA installer does not learn whether the ECU receives the first packet. In this case, within the first time range, the OTA installer performs the operation of "repeatedly sending the first packet", and then may determine in time, by checking whether the response of the ECU to the first packet is received within the first time range, whether the communication between the ECU and the OTA installer is resumed.

In an implementation, the repeatedly sending the first packet includes: repeatedly sending the first packet at equal interval duration, repeatedly sending the first packet at increasing interval duration, or repeatedly sending the first packet at decreasing interval duration. This is not specifically limited herein.

It may be understood that, in a process in which the OTA installer repeatedly sends the first packet to the ECU based on the first communication link, the OTA installer simultaneously monitors whether there is a packet from the ECU on the first communication link. In this way, whether the communication between the ECU and the OTA installer based on the first communication link is resumed can be monitored in real time. For example, within the first time range, if the OTA installer receives, on the first communication link, a feedback sent by the ECU on the first packet, the OTA installer stops sending the first packet.

In an implementation, the first operation further includes: sending first indication information at least once based on a second communication link, where the first indication information indicates that the ECU is disconnected from the OTA installer, or indicates the ECU to perform a second reset operation, and the second communication link is different from the first communication link; or sending a heartbeat packet based on the first communication link.

Herein, the second reset operation is different from the first reset operation, and the second reset operation is a reset operation performed after the first reset operation. In other words, the second reset operation is an added reset operation. The second reset operation is used to re-run or restart the first update software on which OTA programming is performed.

Herein, the second communication link may be understood as a redundant communication link other than the first communication link. Sending the first indication information to the ECU based on the second communication link can ensure that the ECU can successfully receive the first indication information.

Herein, a quantity of times of performing the second reset operation is associated with a quantity of times of sending the first indication information.

In a possible implementation, the OTA installer sends the first indication information once based on the second communication link. For example, the first indication information indicates that the ECU is disconnected from the OTA installer, to trigger the ECU to perform at least one second reset operation.

In a possible implementation, each time the OTA installer sends the first indication information based on the second communication link, for example, the first indication information indicates the ECU to perform the second reset operation, correspondingly, the ECU performs the second reset operation once based on the first indication information. In other words, the OTA installer may actively indicate, based on the redundant communication link, the ECU to perform an additional second reset operation. This helps resolve an ECU disconnection problem.

For example, the heartbeat packet indicates that the OTA installer is online or alive. Whether the ECU receives the heartbeat packet may be used as a trigger condition for the ECU to determine whether to perform at least one second reset operation or at least one rollback operation.

In an implementation, the ECU includes a first partition and a second partition, the first partition is configured to store the first update software, the second partition is configured to store second update software, the second update software is software used before the ECU programs the first update software, and the first operation further includes: when the quantity of times of sending the first indication information reaches a first threshold and the communication between the ECU and the OTA installer is not resumed, sending, by the OTA installer, rollback information to the ECU based on the second communication link, where the rollback information indicates the ECU to start the second update software, and the second communication link is different from the first communication link.

For example, a communication link that carries the rollback information may be the same as or different from a communication link that carries the first indication information. This is not specifically limited herein.

For example, after the quantity of times of sending the first indication information reaches the first threshold, a quantity of times of sending the rollback information is not unlimited. For example, the quantity of times of sending the rollback information is less than or equal to a second threshold. It may be understood that, if the OTA installer receives the response of the ECU to the first packet after sending the rollback information, the OTA installer may stop sending the rollback information.

In other words, if the ECU has a partition that stores software of an earlier version, for example, the second partition of the ECU stores the second update software, the OTA installer may try to resume the communication between the ECU and the OTA installer by using a reset before rollback policy. To be specific, when the quantity of times of sending the first indication information by the OTA installer reaches the first threshold, if the ECU disconnection problem is still not resolved, the rollback information can still be sent to the ECU through the redundant communication link to indicate the ECU to start the second update software. In this way, a success rate of resuming the communication between the ECU and the OTA installer can be improved.

In an implementation, the ECU includes a first partition and a second partition, the first partition is configured to store the first update software, the second partition is configured to store second update software, the second update software is software used before the ECU programs the first update software, and the first operation further includes: sending rollback information at least once based on the second communication link, where the rollback information indicates the ECU to start the second update software, and the second communication link is different from the first communication link.

It can be learned that, different from the foregoing reset before rollback policy used by the OTA installer, herein, if the ECU has a partition that stores software of an earlier version, for example, the second partition of the ECU stores the second update software, the OTA installer may alternatively try to resume the communication between the ECU and the OTA installer by using a direct rollback policy. This helps improve the success rate of resuming the communication between the ECU and the OTA installer.

S203: Within the first time range and before the ECU receives the first packet sent by the OTA installer, the ECU performs the at least one second reset operation.

Herein, the second reset operation is different from the first reset operation, and the second reset operation is a reset operation performed after the first reset operation. The second reset operation is used to re-run or restart the first update software on which OTA programming is performed.

In this embodiment of this application, a trigger condition for the ECU to perform the at least one second reset operation is any one of the following conditions:

(1) before the first time range and within first preset duration after the ECU performs the first reset operation, the ECU does not receive the first packet sent by the OTA installer;

(2) within second preset duration after the ECU performs the first reset operation, the ECU does not receive the heartbeat packet sent by the OTA installer;

(3) the ECU receives the first indication information, where the first indication information indicates that the ECU is disconnected from the OTA installer, or indicates the ECU to start performing the second reset operation; or

(4) the ECU receives power-off indication information, where the power-off indication information is used by the ECU to perform the second reset operation.

For example, the first indication information is update indication information that carries an update package.

For example, the power-off indication information may be included in the first indication information.

Herein, the first preset duration may be equal to or not equal to the second preset duration. For example, the first preset duration or the second preset duration is one detection period.

For the condition (1), after performing the first reset operation to successfully start the first update software, the ECU may detect, by setting a mechanism for the ECU to autonomously monitor the first packet on the first communication link, whether the ECU is disconnected from the OTA installer. For example, if the ECU does not receive the first packet within the first preset duration, the ECU determines that the ECU is disconnected from the OTA installer.

For the condition (2), the OTA installer may periodically send the heartbeat packet to the ECU based on the first communication link, where the heartbeat packet is used to notify a peer end (namely, the ECU) that the OTA installer is alive. If the ECU can receive the heartbeat packet, it indicates that the communication between the ECU and the OTA installer is resumed, and the ECU is not disconnected.

For the condition (3), for example, the first indication information may be sent to the ECU by the OTA installer when the OTA installer determines that the ECU is disconnected from the OTA installer. For example, the first indication information is update indication information that carries an update package.

Herein, the quantity of times of performing the second reset operation is associated with a quantity of times of receiving the first indication information by the ECU.

For example, if the ECU receives the first indication information once, the ECU may be triggered to perform a plurality of second reset operations.

For another example, each time the ECU receives the first indication information, the ECU performs one second reset operation.

It may be understood that, to ensure that the first indication information can be successfully received by the ECU, the first indication information is carried on the second communication link, and the second communication link is different. For the first communication link and the second communication link, refer to descriptions of corresponding content in the following. It can be learned that, when the ECU is disconnected from the OTA installer, indication information may be carried on another redundant communication link, to ensure that the ECU receives the indication information. This helps resume the communication between the ECU and the OTA installer.

For the condition (4), the power-off indication information delivered in an entire vehicle detection process may also trigger the ECU to perform the second reset operation. This helps improve the success rate of resuming the communication between the ECU and the OTA installer based on the first communication link.

In this embodiment of this application, the first communication link includes a diagnostic communication link based on an Ethernet and/or a diagnostic communication link based on a first in-vehicle signal bus.

For example, when the ECU is directly mounted to a domain controller integrated with the OTA installer, or when the ECU is mounted to a domain controller integrated with the OTA installer through the distributed gateway, and a communication connection mode between the ECU and the distributed gateway and a communication connection mode between the distributed gateway and the OTA installer are the same, the first communication link is the diagnostic communication link based on the Ethernet or the diagnostic communication link based on the first in-vehicle signal bus. If the ECU is mounted to the domain controller integrated with the OTA installer through the distributed gateway, and the communication connection mode between the ECU and the distributed gateway and the communication connection mode between the distributed gateway and the OTA installer are different, the first communication link includes the diagnostic communication link based on the Ethernet and the diagnostic communication link based on the first in-vehicle signal bus.

For example, the in-vehicle signal bus includes wired signal buses such as a CAN bus, a LIN bus, and a FlexRay bus. For example, a diagnostic communication link based on the CAN bus may be referred to as a DOCAN link, and a diagnostic communication link based on the LIN bus may be referred to as a DOLIN link.

In an implementation, the first communication link is the diagnostic communication link based on the Ethernet, and the second communication link includes:

at least one of a service communication link based on a second in-vehicle signal bus and a service communication link based on the Ethernet; or
a diagnostic communication link based on a second in-vehicle signal bus.

It may be understood that, if the first communication link is the diagnostic communication link based on the Ethernet, it indicates that the OTA installer is connected to the distributed gateway through the Ethernet, and the distributed gateway is connected to the ECU through the Ethernet. It can be learned from FIG. 1 that the OTA installer communicates with the ECU through the distributed gateway. The following uses Example 1 to Example 6 to specifically describe the second communication link:

Example 1: The second communication link is a service communication link based on the Ethernet.

Example 2: The second communication link is a service communication link based on an in-vehicle signal bus 1. A prerequisite for implementing Example 2 is that the OTA installer and the distributed gateway are connected through the in-vehicle signal bus 1, and the distributed gateway and the ECU are connected through the in-vehicle signal bus 1. In this case, it is equivalent that the second in-vehicle signal bus is the in-vehicle signal bus 1.

Example 3: The second communication link includes a service communication link based on an in-vehicle signal bus 1 and a service communication link based on an in-vehicle signal bus 2, where the in-vehicle signal bus 1 is configured to connect the OTA installer and the distributed gateway, and the in-vehicle signal bus 2 is configured to connect the distributed gateway and the ECU; or the in-vehicle signal bus 2 is configured to connect the OTA installer and the distributed gateway, and the in-vehicle signal bus 1 is configured to connect the distributed gateway and the ECU. In this case, it is equivalent that the second in-vehicle signal bus includes the in-vehicle signal bus 1 and the in-vehicle signal bus 2.

Example 4: The second communication link includes a service communication link based on an in-vehicle signal bus 1 and a service communication link based on the Ethernet, where the in-vehicle signal bus 1 is configured to connect the OTA installer and the distributed gateway, and the Ethernet is configured to connect the distributed gateway and the ECU; or the Ethernet is configured to connect the OTA installer and the distributed gateway, and the in-vehicle signal bus 1 is configured to connect the distributed gateway and the ECU.

Example 5: The second communication link includes a diagnostic communication link based on an in-vehicle signal bus 1. A prerequisite for implementing Example 5 is that the OTA installer and the distributed gateway are connected through the in-vehicle signal bus 1, and the distributed gateway and the ECU are connected through the in-vehicle signal bus 1. In this case, it is equivalent that the second in-vehicle signal bus is the in-vehicle signal bus 1.

Example 6: The second communication link includes a diagnostic communication link based on an in-vehicle signal bus 1 and a diagnostic communication link based on an in-vehicle signal bus 2, where the in-vehicle signal bus 1 is configured to connect the OTA installer and the distributed gateway, and the in-vehicle signal bus 2 is configured to connect the distributed gateway and the ECU; or the in-vehicle signal bus 2 is configured to connect the OTA installer and the distributed gateway, and the in-vehicle signal bus 1 is configured to connect the distributed gateway and the ECU. In this case, it is equivalent that the second in-vehicle signal bus includes the in-vehicle signal bus 1 and the in-vehicle signal bus 2.

In an implementation, the first communication link is the diagnostic communication link based on the first in-vehicle signal bus, and the second communication link includes:

at least one of the service communication link based on the second in-vehicle signal bus and the service communication link based on the Ethernet; or
at least one of a diagnostic communication link based on a third in-vehicle signal bus and the diagnostic communication link based on the Ethernet, where the third in-vehicle signal bus is different from the first in-vehicle signal bus.

Herein, the second in-vehicle signal bus may be the same as or different from the first in-vehicle signal bus. This is not specifically limited herein.

It may be understood that considering that an in-vehicle signal bus connected between the OTA installer and the distributed gateway and an in-vehicle signal bus connected between the distributed gateway and the ECU may be the same or different, a quantity of in-vehicle signal buses included in the first in-vehicle signal bus is not limited in embodiments of this application. For example, the first in-vehicle signal bus is a CAN bus. For another example, the first in-vehicle signal bus includes a CAN bus and a LIN bus.

In an implementation, the ECU is communicatively connected to the OTA installer through the distributed gateway in the vehicle, the first communication link includes the diagnostic communication link based on the Ethernet and the diagnostic communication link based on the first in-vehicle signal bus, and the second communication link includes:

at least one of the service communication link based on the second in-vehicle signal bus and the service communication link based on the Ethernet; or
a third communication link and a fourth communication link, where the third communication link is configured to connect the OTA installer and the distributed gateway, and the fourth communication link is configured to connect the distributed gateway and the ECU.

If the diagnostic communication link based on the Ethernet in the first communication link is configured to connect the OTA installer and the distributed gateway, and the diagnostic communication link based on the first in-vehicle signal bus in the first communication link is configured to connect the distributed gateway and the ECU, when the third communication link is a diagnostic communication link based on any in-vehicle signal bus, the fourth communication link is a diagnostic communication link based on the Ethernet or a diagnostic communication link based on the third in-vehicle signal bus, where the third in-vehicle signal bus is different from the first in-vehicle signal bus. Alternatively, when the third communication link is a service communication link based on the Ethernet or any in-vehicle signal bus, the fourth communication link is a service communication link based on the Ethernet or any in-vehicle signal bus. Similarly, if the diagnostic communication link based on the first in-vehicle signal bus in the first communication link is configured to connect the OTA installer and the distributed gateway, and the diagnostic communication link based on the Ethernet in the first communication link is configured to connect the distributed gateway and the ECU, when the third communication link is a diagnostic communication link based on the Ethernet or a diagnostic communication link based on the third in-vehicle signal bus, the fourth communication link is a diagnostic communication link based on any in-vehicle signal bus, where the third in-vehicle signal bus is different from the first in-vehicle signal bus. Alternatively, when the third communication link is a service communication link based on the Ethernet or any in-vehicle signal bus, the fourth communication link is a service communication link based on the Ethernet or any in-vehicle signal bus.

Refer to Table 1. Table 1 more clearly describes various possible cases of the first communication link and the second communication link. Table 1 mainly shows a correspondence among a first communication link, a second communication link, and a type of the second communication link. It can be learned from Table 1 that a type of the first communication link is a diagnostic communication link, and a type of the second communication link is a diagnostic communication link or a service communication link. In Table 1, a VIU is used as an example of a distributed gateway.

In Table 1, when the first communication link is a diagnostic communication link based on an Ethernet, if the type of the second communication link is diagnostic, the second communication link is a diagnostic communication link based on an in-vehicle signal bus; or if the type of the second communication link is service, the second communication link includes a service communication link based on the Ethernet and/or an in-vehicle signal bus.

In Table 1, when the first communication link is a diagnostic communication link based on an in-vehicle signal bus 1, if the type of the second communication link is diagnostic, the second communication link includes a diagnostic communication link based on the Ethernet and/or an in-vehicle signal bus other than the in-vehicle signal bus 1; or if the type of the second communication link is service, the second communication link includes a service communication link based on the Ethernet and/or an in-vehicle signal bus.

In Table 1, the first communication link includes the diagnostic communication link based on the in-vehicle signal bus 1 and a diagnostic communication link based on an in-vehicle signal bus 2. The diagnostic communication link based on the in-vehicle signal bus 1 is configured to connect an OTA installer and a VIU, and the diagnostic communication link based on the in-vehicle signal bus 2 is configured to connect the VIU and an ECU. If the type of the second communication link is diagnostic, a communication link configured to connect the OTA installer and the VIU in the second communication link is the diagnostic communication link based on the Ethernet or the in-vehicle signal bus other than the in-vehicle signal bus 1, and a communication link configured to connect the VIU and the ECU in the second communication link is a diagnostic communication link based on the Ethernet or an in-vehicle signal bus other than the in-vehicle signal bus 2. If the type of the second communication link is service, the second communication link includes the service communication link based on the Ethernet and/or the in-vehicle signal bus.

In Table 1, the first communication link includes the diagnostic communication link based on the Ethernet and the diagnostic communication link based on the in-vehicle signal bus 1. The diagnostic communication link based on the Ethernet is configured to connect the OTA installer and the VIU, and the diagnostic communication link based on the in-vehicle signal bus 1 is configured to connect the VIU and the ECU. If the type of the second communication link is diagnostic, the communication link configured to connect the OTA installer and the VIU in the second communication link is the diagnostic communication link based on the in-vehicle signal bus, and the communication link configured to connect the VIU and the ECU in the second communication link is the diagnostic communication link based on the Ethernet or the in-vehicle signal bus other than the in-vehicle signal bus 1. If the type of the second communication link is service, the second communication link includes the service communication link based on the Ethernet and/or the in-vehicle signal bus.

**Table 1**

| No. | First communication link (Type: Diagnostic) | | Type of the second communication link | Second communication link | |
|---|---|---|---|---|---|
| | OTA installer-VIU | VIU-ECU | | OTA installer-VIU | VIU-ECU |
| 1 | Ethernet | | Diagnostic | In-vehicle signal bus | |
| | | | Service | Ethernet and/or in-vehicle signal bus | |
| 2 | In-vehicle signal bus 1 | | Diagnostic | Ethernet and/or in-vehicle signal bus other than the in-vehicle signal bus 1 | |
| | | | Service | Ethernet and/or in-vehicle signal bus | |
| 3 | In-vehicle signal bus 1 | In-vehicle signal bus 2 | Diagnostic | Ethernet or in-vehicle signal bus other than the in-vehicle signal bus 1 | Ethernet or in-vehicle signal bus other than the in-vehicle signal bus 2 |
| | | | Service | Ethernet and/or in-vehicle signal bus | |
| 4 | Ethernet | In-vehicle signal bus 1 | Diagnostic | In-vehicle signal bus | Ethernet or in-vehicle signal bus other than the in-vehicle signal bus 1 |
| | | | Service | Ethernet and/or in-vehicle signal bus | |
| 5 | In-vehicle signal bus 1 | Ethernet | Diagnostic | Ethernet or in-vehicle signal bus other than the in-vehicle signal bus 1 | In-vehicle signal bus |
| | | | Service | Ethernet and/or in-vehicle signal bus | |

In Table 1, the first communication link includes the diagnostic communication link based on the in-vehicle signal bus 1 and the diagnostic communication link based on the Ethernet. The diagnostic communication link based on the in-vehicle signal bus 1 is configured to connect the OTA installer and the VIU, and the diagnostic communication link based on the Ethernet is configured to connect the VIU and the ECU. If the type of the second communication link is diagnostic, the communication link configured to connect the OTA installer and the VIU in the second communication link is the diagnostic communication link based on the Ethernet or the in-vehicle signal bus other than the in-vehicle signal bus 1, and the communication link configured to connect the VIU and the ECU in the second communication link is the diagnostic communication link based on the in-vehicle signal bus. If the type of the second communication link is service, the second communication link includes the service communication link based on the Ethernet and/or the in-vehicle signal bus.

It may be understood that, Table 1 is merely intended to make the foregoing description clearer and more intuitive, and does not limit the correspondence among the first communication link, the second communication link, and the type of the second communication link.

It may be understood that, a prerequisite that the second communication link corresponding to the first communication link shown in Table 1 may be used as a redundant communication link is that a corresponding Ethernet and/or in-vehicle signal bus are/is deployed in a connection between the OTA installer and the distributed gateway (for example, the VIU) and between the distributed gateway and the ECU. For example, if the first communication link is the diagnostic communication link based on the Ethernet, and the second communication link is a diagnostic communication link based on a CAN, a prerequisite that the second communication link may be used as a redundant communication link of the first communication link is that the OTA installer and the distributed gateway, and the distributed gateway and ECU are connected through the CAN bus.

Herein, it is set that the ECU performs at least one more second reset operation within the first time range after performing the first reset operation. This helps improve the success rate of resuming the communication between the ECU and the OTA installer based on the first communication link, and also helps improve a success rate of updating the ECU and reliability of updating the entire vehicle.

S204: The ECU sends a second packet to the OTA installer within the first time range, where the second packet is associated with the first packet.

In an implementation, the second packet includes a version number of the first update software. In this case, it indicates that the ECU resumes the communication between the ECU and the OTA installer by performing the second reset operation.

In another implementation, the second packet includes a version number of the second update software. In this case, it indicates that the ECU resumes the communication between the ECU and the OTA installer by starting the second update software (or performing a rollback operation).

Herein, the second packet is carried on the first communication link.

In an implementation, that the ECU sends a second packet to the OTA installer includes: The ECU receives the first packet, and in response to the first packet, the ECU sends the second packet to the OTA installer. In this case, the second packet is sent only when the ECU receives the first packet.

Further, the second packet is a heartbeat packet, and the second packet may further indicate that the ECU is online or alive.

S205: Within the first time range, if the communication between the ECU 1 and the OTA installer is resumed, the OTA installer receives the second packet.

In an implementation, the OTA installer may further determine an update result of the ECU based on the second packet.

Specifically, the determining an update result of the ECU based on the second packet includes: if a version number included in the second packet is the same as the version number of the first update software, determining that the ECU is successfully updated; or if a version number included in the second packet is different from the version number of the first update software, or a version number included in the second packet is the same as the version number of the second update software, determining that the ECU fails to be updated. In this way, the OTA installer can accurately learn the update result of the ECU based on the second packet, and can accurately determine whether an ECU performs update or rollback when a software version used by the entire vehicle is unified. In this way, proper running of a service in a working environment matching the software version can be implemented, and this helps improve the reliability of updating the entire vehicle.

In some possible embodiments, after the OTA installer determines that the ECU fails to be updated, the OTA installer may further send update indication information to the ECU, where the update indication information indicates the ECU to re-perform OTA update based on the first update software. In this way, when the communication between the ECU and the OTA installer is resumed, the ECU re-programs the first update software based on the update indication information. This helps improve the success rate of updating the ECU, and helps unify software versions of the ECU of the entire vehicle, to improve the reliability of updating the entire vehicle.

In some possible embodiments, within the first time range, if the OTA installer does not receive the second packet sent by the ECU, the OTA installer may further send feedback information to an OTA manager, where the feedback information indicates that the ECU is disconnected from the OTA installer. In this way, the OTA manager may further perform entire vehicle detection or request manual processing to resolve the problem of the disconnection between the ECU and the OTA installer.

It can be learned that, after the ECU performs a reset operation and successfully starts newly installed update software, if the ECU is disconnected from the OTA installer, a reset operation is added to the ECU after the update software is successfully started, or the ECU is notified, through a redundant link, to perform the reset operation. This helps improve the success rate of resuming the communication between the ECU and the OTA installer, and also helps improve the success rate and reliability of updating the ECU and a success rate of updating the entire vehicle.

The following describes an update detection method in which an ECU takes the lead in starting an update detection process.

FIG. 3 is a flowchart of another update detection method according to an embodiment of this application.

The method may be applied between a first device and an ECU 1. For example, the first device is the foregoing UDS installer. The UDS installer is an example of an OTA installer. That is, the method is applied between the UDS installer and the ECU. However, this embodiment of this application does not limit the first device to be only the UDS installer. For example, the first device may alternatively be an OTA installer using another diagnostic communication protocol, or may be an OTA manager integrated with an OTA installer, or may be a domain controller integrated with an OTA installer.

In some possible embodiments, when the first device and the ECU 1 are not directly connected through an Ethernet or an in-vehicle signal bus, the method shown in FIG. 3 may alternatively be applied to a communication system including the first device, a distributed gateway, and the ECU 1. The ECU 1 communicates with the first device through the distributed gateway.

In this embodiment of FIG. 3, a DOIP link is used as an example of the foregoing first communication link. In other words, in a preset update process of the ECU, communication between the UDS installer and the ECU is based on the DOIP link. However, this embodiment of this application does not limit the first communication link to be only the DOIP link. The method includes but is not limited to the following steps.

S301: The ECU 1 performs a first reset operation based on first reset information sent by the UDS installer, and if a preset condition is met, the ECU 1 starts performing at least one second reset operation in at least one first detection period.

Herein, that the ECU performs the first reset operation means that the ECU starts or runs first update software once. For descriptions of the first reset operation and the second reset operation, refer to the descriptions of corresponding content in the embodiment of FIG. 2. Details are not described herein again.

Herein, the first detection period may also be referred to as self-healing duration of the ECU 1.

For example, that the preset condition is met means that the ECU 1 determines that the ECU 1 is disconnected from the UDS installer, and therefore the ECU 1 is triggered to perform S303. A DOIP link is used as an example of the first communication link. If the ECU 1 is disconnected from the UDS installer, it indicates that the ECU cannot communicate with the UDS installer. Specifically, the ECU cannot receive information sent by the UDS installer to the ECU based on the DOIP link, and the UDS installer cannot receive information sent by the ECU to the UDS installer based on the DOIP link.

The preset condition is any one of the following conditions:

(1) within first preset duration after the ECU 1 performs the first reset operation, the ECU 1 does not receive a first packet sent by the UDS installer;
(2) within second preset duration after the ECU 1 performs the first reset operation, the ECU 1 does not receive a heartbeat packet sent by the UDS installer;
(3) the ECU 1 receives first indication information, where the first indication information indicates that the ECU 1 is disconnected from the UDS installer, or indicates the ECU 1 to start performing the second reset operation; or
(4) the ECU 1 receives power-off indication information, where the power-off indication information is used by the ECU 1 to perform the second reset operation.

The foregoing condition (3) specifically means that before the at least one first detection period and within third preset duration after the ECU 1 performs the first reset operation, if the ECU 1 receives the first indication information, the ECU 1 may be triggered to perform the at least one second reset operation.

Herein, the preset condition is the trigger condition in S203 in the embodiment of FIG. 2. For details, refer to the corresponding description of the trigger condition.

For example, the first indication information may be obtained by the ECU 1 from the UDS installer, the OTA manager, and a vehicle control apparatus. Herein, when the first indication information is obtained by the ECU 1 from the OTA manager, the UDS installer is integrated into the OTA manager. For example, the vehicle control apparatus may be an integrated software and hardware platform used to support intelligent driving, namely, an onboard computing platform, for example, a mobile data center (mobile data center, MDC), an advanced driving assistance system domain controller (advanced driving assistance system domain controller, ADAS DC), or an automatic drive domain controller (automatic drive domain controller, AD DC), or may be an integrated software and hardware platform used to support body control and chassis control, or the like.

For example, because the first communication link is a DOIP link, to ensure that the ECU 1 can receive the first indication information, the first indication information is carried on the following link:

at least one of a service communication link based on an in-vehicle signal bus and a service communication link based on an Ethernet; or

a diagnostic communication link based on the in-vehicle signal bus.

An example in which the ECU 1 obtains the first indication information from the UDS installer is used. It is assumed that the ECU 1 obtains the first indication information from the UDS installer through the distributed gateway. The following specifically describes a bearer manner of the first indication information with reference to possible manners of connections between the UDS installer and the distributed gateway and between the distributed gateway and the ECU 1.

Connection manner 1: The UDS installer is connected to the distributed gateway through the Ethernet, and the distributed gateway is connected to the ECU 1 through the Ethernet.

In this case, the first indication information is carried on the service communication link based on the Ethernet. Specifically, the UDS installer may send the first indication information to the distributed gateway through the service communication link based on the Ethernet, and the distributed gateway sends the first indication information to the ECU 1 through the service communication link based on the Ethernet.

Connection manner 2: The UDS installer is connected to the distributed gateway through the Ethernet, and the distributed gateway is connected to the ECU 1 through the in-vehicle signal bus.

In this case, in a process in which the UDS installer sends the first indication information to the ECU 1, the first indication information is first carried on the service communication link based on the Ethernet, and then carried on the service communication link based on the in-vehicle signal bus. Specifically, the UDS installer may send the first indication information to the distributed gateway through the service communication link based on the Ethernet, and the distributed gateway sends the first indication information to the ECU 1 through the service communication link based on the in-vehicle signal bus.

Connection manner 3: The UDS installer is connected to the distributed gateway through the in-vehicle signal bus, and the distributed gateway is connected to the ECU 1 through the Ethernet.

In this case, in a process in which the UDS installer sends the first indication information to the ECU 1, the first indication information is first carried on the service communication link based on the in-vehicle signal bus, and then carried on the service communication link based on the Ethernet. Specifically, the UDS installer may send the first indication information to the distributed gateway through the service communication link based on the in-vehicle signal bus, and the distributed gateway sends the first indication information to the ECU 1 through the service communication link based on the Ethernet.

Connection manner 4: The UDS installer is connected to the distributed gateway through the in-vehicle signal bus, and the distributed gateway is connected to the ECU 1 through the in-vehicle signal bus.

In one case, the first indication information is carried on the service communication link based on the in-vehicle signal bus. Specifically, the UDS installer may send the first indication information to the distributed gateway through the service communication link based on the in-vehicle signal bus, and the distributed gateway sends the first indication information to the ECU 1 through the service communication link based on the in-vehicle signal bus.

In another case, the first indication information is carried on the diagnostic communication link based on the in-vehicle signal bus. Specifically, the UDS installer may send the first indication information to the distributed gateway through the diagnostic communication link based on the in-vehicle signal bus, and the distributed gateway sends the first indication information to the ECU 1 through the diagnostic communication link based on the in-vehicle signal bus.

The first indication information is not carried on the DOIP link, but is carried on the link shown above, to ensure that the ECU 1 can receive the first indication information, and the ECU 1 is triggered to perform S303.

S302: The UDS installer repeatedly sends the first packet to the ECU 1 based on the DOIP link within preset check duration.

Herein, the first packet is used to request to obtain a version number of update software currently used by the ECU 1.

Herein, the preset check duration is equivalent to the first time range in the embodiment of FIG. 2.

For example, repeatedly sending the first packet may be: repeatedly sending the first packet at equal interval duration, repeatedly sending the first packet at increasing interval duration, or repeatedly sending the first packet at decreasing interval duration.

For example, that the UDS installer repeatedly sends the first packet is specifically: The UDS installer separately sends the first packet to the ECU based on the DOIP link at a moment t1, a moment t2, a moment t3, a moment t4, .... In one case, interval duration between any two adjacent sending moments of the first packet may be equal, for example, $(t2 - t1) = (t3 - t2) = (t4 - t3) =$.... In another case, interval duration between any two adjacent sending moments of the first packet may be unequal. For example, interval duration of sending the first packet may increase, that is, $(t2 - t1) < (t3 - t2) < (t4 - t3) <$.... For another example, interval duration of sending the first packet may decrease, that is, $(t2 - t1) > (t3 - t2) > (t4 - t3) >$....

It may be understood that, within the preset check duration, if the UDS installer receives, on the DOIP link, a response of the ECU to the first packet sent by the UDS installer once, the UDS installer may stop sending the first packet to the ECU 1.

Herein, the preset check duration includes the at least one first detection period. For example, a relationship between the preset check duration and the at least one first detection period may meet the following formula (1):

$$T = T1 * n + \Delta t \qquad \text{Formula (1)}$$

Herein, T represents preset check duration, T1 represents one first detection period, n represents a quantity of the at least one first detection period, and $\Delta t$ represents reserved duration, namely, a margin.

S303: In the at least one first detection period, before the ECU 1 receives the first packet, the ECU 1 performs the at least one second reset operation, where the at least one second reset operation corresponds to the at least one first detection period.

For example, that the at least one second reset operation corresponds to the at least one first detection period may be: each time the ECU 1 performs the second reset operation, the ECU 1 starts one first detection period.

For example, it is assumed that duration of each first detection period is T1. Refer to FIG. 3. The ECU 1 performs a 1st second reset operation, if within duration T1 after performing the 1st second reset operation, the ECU 1 does not receive, on the DOIP link, the first packet sent by the UDS installer, the ECU 1 performs a 2nd second reset operation, and if within duration T1 after performing the 2nd second reset operation, the ECU 1 does not receive, on the DOIP link, the first packet sent by the UDS installer, the ECU 1 performs a 3rd second reset operation, .... The ECU 1 stops performing the second reset operation until the ECU 1 receives, on the DOIP link within duration T1 after performing a second reset operation, the first packet sent by the UDS installer, or a quantity of times of performing the second reset operation by the ECU 1 reaches a first threshold.

For another example, it is assumed that within the duration T1 after the ECU 1 performs the 1st second reset operation, the ECU 1 receives, on the DOIP link, the first packet sent by the UDS installer. It indicates that the second reset operation of the ECU 1 resumes DOIP link-based communication between the ECU 1 and the UDS installer. Therefore, the ECU 1 does not need to perform the 2nd second reset operation.

In other words, when the ECU is disconnected from the UDS installer, performing an additional second reset operation by the ECU helps resolve an ECU disconnection problem, and a success rate of resuming communication between the ECU and the UDS installer can be improved by setting the ECU to try to perform a plurality of second reset operations.

Herein, an execution sequence of S302 and S303 is not limited. To be specific, S302 and S303 may be performed simultaneously, or S302 may be performed before S303, or S302 may be performed after S303. For example, when the ECU 1 performs the 1st second reset operation, the UDS installer synchronously starts to send the first packet in S302. Alternatively, the UDS installer sends the first packet only after the ECU 1 independently performs the 1st second reset operation in S302. Alternatively, the ECU 1 performs the 1st second reset operation only after the UDS installer sends the first packet in S302.

S304: In the at least one first detection period, the ECU 1 receives the first packet, and in response to the first packet, the ECU 1 sends a second packet to the UDS installer based on the DOIP link.

The second packet includes a version number of the first update software.

S305: Within the preset check duration, if the communication between the ECU 1 and the UDS installer is resumed, the UDS installer receives the second packet on the DOIP link.

Herein, when the communication between the ECU 1 and the UDS installer is resumed, a delay between a moment at which the ECU 1 sends the second packet to the UDS installer and a moment at which the UDS installer receives the second packet is negligible.

Further, when a version number of update software carried in the second packet is the same as the version number of the first update software, the UDS installer determines that the ECU 1 is successfully updated. In other words, the UDS installer receives the second packet, and may obtain, based on the second packet, a version number of latest update software installed on the ECU 1, that is, learn that the ECU 1 has been appropriately updated to the latest version, so as to determine that current update of the ECU 1 succeeds. This improves reliability of updating the ECU, and helps improve a success rate and reliability of updating an entire vehicle.

In some possible embodiments, if a quantity of the at least one second reset operation reaches the first threshold, it indicates that the ECU 1 does not receive the first packet on the DOIP link in the at least one first detection period, and the ECU 1 stops monitoring the first packet on the DOIP link. In this case, because the ECU 1 does not receive the first packet, the ECU 1 does not send the second packet to the UDS installer. For the UDS installer, when the UDS installer does not receive the second packet on the DOIP link within the preset check duration, the UDS installer may send feedback information to the OTA manager, so that the OTA manager performs entire vehicle detection to try to resume the communication between the UDS installer and the ECU 1. For details, refer to related descriptions in the following embodiment of FIG. 5. The feedback information indicates that the ECU 1 is disconnected from the UDS installer.

In some possible embodiments, the ECU 1 includes a first partition and a second partition. The first partition is configured to store the first update software, the second partition is configured to store second update software, and the second update software is software used before the ECU programs the first update software. If the quantity of the at least one second reset operation reaches the first threshold, the ECU may further start the second update software (or perform a rollback operation, where the rollback operation is used to switch from the first partition to the second partition to start the second update software), so as to try to resume the communication between the ECU 1 and the UDS installer. In a second detection period, if the communication between the ECU 1 and the UDS installer is resumed, the ECU 1 receives the first packet on the DOIP link, and the ECU 1 sends a third packet to the UDS installer based on the first communication link, where the third packet includes a version number of the second update software. Correspondingly, within the preset check duration, if the communication between the ECU 1 and the UDS installer is resumed, the UDS installer receives the third packet on the DOIP link. Because a version number included in the third packet is different from the version number of the first update software, the UDS installer may further determine, based on the third packet, that the ECU 1 fails to be updated. In other words, the UDS installer may accurately learn an update result of the ECU 1, to facilitate subsequent accurate decision-making, and ensure a unified software version used by the entire vehicle.

Herein, a quantity of times of continuously performing the rollback operation by the ECU 1 is not limited in this embodiment of this application.

It may be understood that, for the UDS installer, in a case in which the ECU 1 performs the rollback operation after performing the at least one second reset operation, in addition to the at least one first detection period, the preset check duration further includes the second detection period corresponding to the rollback operation performed by the ECU 1.

Further, when the UDS installer determines, based on the received third packet, that the ECU 1 fails to be updated, the UDS installer may further send update indication information to the ECU 1 based on the DOIP link, where the update indication information indicates the ECU 1 to re-perform OTA update based on the first update software. This helps improve the success rate of updating the ECU.

Further, if the UDS installer does not receive the third packet on the DOIP link within the preset check duration, the UDS installer may send the feedback information to the OTA manager, so that the OTA manager performs entire vehicle detection to try to resume the communication between the UDS installer and the ECU 1. For details, refer to related descriptions in the following embodiment of FIG. 5. The feedback information indicates that the ECU 1 is disconnected from the UDS installer.

In some possible embodiments, when the ECU 1 has a partition that stores software of an earlier version, for example, the second partition of the ECU 1 is configured to store the second update software, when the preset condition is met in S301, the ECU 1 may not be triggered to perform the at least one second reset operation, that is, S303 is not performed, but the ECU 1 is triggered to perform at least one rollback operation (or start the second update software at least once) in at least one detection period. Each rollback operation corresponds to one detection period. In this case, the UDS installer may monitor, on the DOIP link within the preset check duration, whether there is the third packet from the ECU 1. When receiving the third packet, the UDS installer may accurately learn that the ECU 1 fails to be updated this time, that is, the ECU is not appropriately updated to the latest version. In this way, in an ECU update process, transmission of the third packet helps the OTA installer collect statistics on an update status of the ECU, and facilitates subsequent accurate decision-making, for example, determining which ECUs need to be rolled back or which ECUs need to be re-updated, to ensure matched and unified versions of ECUs of the entire vehicle, and ensure proper running of each service.

It can be learned that in this embodiment of this application, the ECU performs the second reset operation after performing the first reset operation. This helps resolve a problem of a disconnection between the ECU and the UDS installer. In addition, the ECU is set to try to perform the plurality of second reset operations. This can improve the success rate of resuming the communication between the ECU and the UDS installer. In addition, when the ECU has a partition that stores the software of the earlier version, the ECU may use a reset before rollback policy or a direct rollback policy, to resume the communication between the ECU and the UDS installer. In this way, the ECU rolls back to the software of the earlier version used before the update. This helps improve the reliability of updating the entire vehicle.

The following describes an update detection method in which a UDS installer takes the lead in starting an update detection process.

FIG. 4 is a flowchart of still another update detection method according to an embodiment of this application.

The method may be applied between the first device and the ECU 1. A UDS installer is used as an example of the first device. That is, the method is applied between the UDS installer and the ECU. However, this embodiment of this application does not limit the first device to be only the UDS installer. For another possible form of the first device, refer to the description of the first device in the embodiment of FIG. 2.

In some possible embodiments, when the first device and the ECU 1 are not directly connected through an Ethernet or an in-vehicle signal bus, the method shown in FIG. 4 may alternatively be applied to a communication system including the first device, a distributed gateway, and the ECU 1. The ECU 1 communicates with the first device through the distributed gateway.

The method includes but is not limited to the following steps.

S401: If the UDS installer does not receive, on a first communication link (for example, a DOIP link) after sending first reset information, a response of the ECU 1 to a first packet, the UDS installer starts sending the first packet and first indication information.

Herein, in this embodiment of FIG. 4, a DOIP link is used as an example of the first communication link. However, this embodiment of this application does not limit the first communication link to be only the DOIP link. For other possible forms of the first communication link, refer to related descriptions of the first communication link in Table 1 in the embodiment of FIG. 2. Details are not described herein again.

Herein, the first packet is used to request to obtain a version number of update software currently used by the ECU. The first packet is carried on the first communication link.

For example, the first indication information indicates the ECU to perform a second reset operation. The first indication information is carried on a second communication link, and the second communication link is different from the first communication link.

For example, if the UDS installer does not receive, on the DOIP link, a feedback of the ECU 1 on the first packet after sending the first reset information, the UDS installer determines that the ECU 1 is disconnected from the UDS installer, so that the UDS installer starts sending the first packet and the first indication information, that is, the UDS installer is triggered to perform S402 and S403. For details about sending the first indication information, refer to the following description of S402. For details about sending the first packet, refer to the following description of S403.

For example, before the UDS installer determines that the ECU 1 is disconnected from the UDS installer, a process of interaction between the UDS installer and the ECU 1 is as follows: After the UDS installer learns that the ECU 1 completes programming of first update software, the UDS installer first sends the first reset information to the ECU 1 based on the DOIP link. The ECU 1 performs a first reset operation based on the first reset information to start the first update software, and sends response information of the first reset information to the UDS installer based on the DOIP link. The response information is used to notify the UDS installer that the ECU 1 has performed the first reset operation based on the first reset information. After receiving the response information, the UDS installer sends the first packet to the ECU 1 based on the DOIP link, and waits to receive a response of the ECU 1 to the first packet. The first packet is used to request to obtain a version number of update software currently used by the ECU 1. In this case, an occasion when the ECU 1 is disconnected from the UDS installer may be, for example, after the ECU 1 sends the response information of the first reset information to the UDS installer (that is, the ECU 1 does not receive the first packet), or may be after the ECU 1 receives the first packet.

Correspondingly, a reason why the UDS installer does not receive, on the DOIP link, the feedback of the ECU 1 on the first packet includes: The ECU 1 does not receive the first packet on the DOIP link due to a disconnection, and therefore does not send a response to the first packet to the UDS installer. Therefore, the OTA installer does not receive the response of the ECU to the first packet. Alternatively, the ECU 1 has received the first packet on the DOIP link and sent a response to the first packet to the UDS installer, but because the ECU 1 is disconnected, the UDS installer does not receive, on the DOIP link, the feedback of the ECU 1 on the first packet.

S402: In at least one detection period, the UDS installer sends the first indication information to the ECU 1 at least once based on the second communication link.

Herein, the first indication information indicates the ECU 1 to perform the second reset operation. In other words, in the at least one detection period, the ECU 1 performs at least one second reset operation.

For example, in FIG. 4, a dotted line with an arrow indicates that the first indication information is sent once. It can be learned that each time the UDS installer sends the first indication information, one detection period is started. For example, a quantity of times of sending the first indication information is the same as a quantity of started detection periods.

For example, a difference between a moment at which the UDS installer sends the first indication information and a moment at which the ECU 1 receives the first indication information is negligible.

Herein, the second communication link is different from the first communication link. In this way, it is ensured that the ECU 1 can receive the first indication information, so that the ECU 1 performs the second reset operation based on the first indication information. This helps improve a success rate of resuming communication between the ECU 1 and the UDS installer based on the first communication link.

When the first communication link is the DOIP link, the second communication link may be a link shown in any one of the following cases:

case 1: a diagnostic communication link based on any in-vehicle signal bus;
case 2: a service communication link based on an Ethernet;
case 3: a service communication link based on any in-vehicle signal bus; or
case 4: a service communication link based on an Ethernet and a service communication link based on any in-vehicle signal bus.

When the ECU 1 is connected to the UDS installer through the distributed gateway, that the UDS installer sends the first indication information to the ECU 1 is specifically as follows: The UDS installer sends the first indication information to the ECU 1 through the distributed gateway.

In the foregoing case 4, the second communication link includes two communication links: the service communication link based on the Ethernet and the service communication link based on any in-vehicle signal bus. In an implementation, the UDS installer sends the first indication information to the distributed gateway through the service communication link based on the Ethernet, and the distributed gateway sends the first indication information to the ECU 1 through the service communication link based on any in-vehicle signal bus. In another implementation, the UDS installer sends the first indication information to the distributed gateway through the service communication link based on any in-vehicle signal bus, and the distributed gateway sends the first indication information to the ECU 1 through the service communication link based on the Ethernet.

In the foregoing case 2, a process of sending the first indication information is, for example, the UDS installer sends the first indication information to the distributed gateway through the service communication link based on the Ethernet, and the distributed gateway also sends the first indication information to the ECU 1 through the service communication link based on the Ethernet.

In the foregoing case 1, an in-vehicle signal bus may be, for example, a CAN bus, a LIN bus, and a FlexRay bus. For example, a diagnostic communication link based on the CAN bus may be referred to as a DOCAN link, and a diagnostic communication link based on the LIN bus may be referred to as a DOLIN link.

In some possible embodiments, the first communication link may not be the DOIP link. In this case, for other possible forms of the first communication link and a corresponding second communication link, refer to related descriptions in Table 1 in the embodiment of FIG. 2. Details are not described herein again.

S403: The UDS installer repeatedly sends the first packet to the ECU 1 based on the DOIP link in the at least one detection period. For details about this step, refer to the related description of the sending manner of the first packet in S302 in the embodiment of FIG. 3. Details are not described herein again.

For example, in FIG. 4, it is assumed that duration of each detection period is T1. Within duration T1 after the UDS installer sends the first indication information to the ECU 1 for the first time, if the UDS installer does not receive, on the DOIP link, a response (for example, a second packet) of the ECU 1 to the first packet, the UDS installer sends the first indication information to the ECU 1 for the second time, and if within duration T1, the UDS installer does not receive, on the DOIP link, a response of the ECU 1 to the first packet, the UDS installer sends the first indication information to the ECU 1 for the third time, .... The UDS installer stops sending the first indication information and stops sending the first packet to the ECU 1 until the UDS installer receives, on the DOIP link, the response (for example, the second packet) of the ECU 1 to the first packet within duration T1 after sending the first indication information, or a quantity of times of sending the first indication information by the UDS installer (or a quantity of times of performing the second reset operation by the ECU 1) reaches a first threshold.

In other words, in a process of sending the first indication information and the first packet, if the UDS installer receives, on the DOIP link, a feedback of the ECU 1 on the first packet, the UDS installer may stop sending the first indication information and stop sending the first packet.

S404: The ECU 1 sends the second packet to the UDS installer based on the DOIP link within target preset duration.

Herein, the target preset duration corresponds to the at least one detection period. For example, the target preset duration includes the at least one detection period. The target preset duration is equivalent to the first time range in the embodiment of FIG. 2.

In an implementation, that the ECU 1 sends the second packet to the UDS installer based on the DOIP link includes: The ECU 1 receives, on the DOIP link, the first packet sent by the UDS installer; and in response to the first packet, the ECU 1 sends the second packet to the UDS installer based on the DOIP link, where the second packet includes a version number of the first update software. In other words, if the ECU 1 can receive the first packet, it indicates that DOIP link-based communication between the ECU 1 and the UDS installer is resumed, and the ECU 1 and the UDS installer may continue to communicate with each other based on the DOIP link.

Further, the second packet is a heartbeat packet, and the second packet may further indicate that the ECU 1 is alive or online.

In another implementation, that the ECU 1 sends the second packet to the UDS installer based on the DOIP link includes: Each time after the ECU 1 performs the second reset operation, the ECU 1 repeatedly sends the second packet to the UDS installer based on the DOIP link, where the second packet is the heartbeat packet, and the second packet further includes the version number of the first update software.

S405: In the at least one detection period, if the communication between the ECU 1 and the UDS installer is resumed, the UDS installer receives the second packet on the DOIP link.

Further, when a version number included in the second packet is the same as the version number of the first update software, the UDS installer determines that the ECU 1 is successfully updated. In other words, the UDS installer may obtain, based on the second packet, a version number of latest update software installed on the ECU 1, to determine that the ECU 1 is successfully updated. This improves reliability of updating the ECU, and helps improve a success rate and reliability of updating an entire vehicle.

In some possible embodiments, if the UDS installer does not receive the second packet on the DOIP link in the at least one detection period, the UDS installer may send feedback information to an OTA manager, so that the OTA manager performs entire vehicle detection to try to resume the communication between the UDS installer and the ECU 1 based on the first communication link. For details, refer to related descriptions in the following embodiment of FIG. 5. The feedback information indicates that the ECU 1 is disconnected from the UDS installer.

In some possible embodiments, the ECU 1 includes a first partition and a second partition. The first partition is configured to store the first update software, the second partition is configured to store second update software, and the second update software is software used before the ECU programs the first update software. If the quantity of times of sending the first indication information reaches the first threshold and the communication between the ECU 1 and the UDS installer is not resumed, the UDS installer may further send rollback information to the ECU 1. The rollback information indicates the ECU 1 to start the second update software (or indicates the ECU 1 to perform a rollback operation). The rollback information is carried on a third communication link, and the third communication link is different from the first communication link. For the third communication link, refer to the related description of the second communication link in S402. Details are not described herein again. It can be learned that a redundant communication link carries the rollback information, so that it can be ensured that the ECU 1 can receive the rollback information. In this way, the ECU 1 can try to resume the communication between the ECU 1 and the UDS installer by starting software of an earlier version.

For example, a quantity of times of sending the rollback information by the UDS installer is not limited in this embodiment of this application.

It may be understood that each time the OTA installer sends the rollback information, a detection period is also started.

Correspondingly, after the UDS installer sends the rollback information to the ECU 1, if the communication between the ECU 1 and the UDS installer is resumed, the UDS installer receives, on the DOIP link, a third packet that is of the ECU 1 and that is in response to the first packet, where the third packet includes a version number of the second update software. Because a version number included in the third packet is different from the version number of the first update software, the UDS installer may further determine, based on the third packet, that the ECU 1 fails to be updated. In other words, the UDS installer may accurately learn an update result of the ECU 1, to facilitate subsequent accurate decision-making, and ensure a unified software version used by the entire vehicle.

Further, when the UDS installer determines, based on the received third packet, that the ECU 1 fails to be updated, the UDS installer may further send update indication information to the ECU 1 based on the DOIP link, where the update indication information indicates the ECU 1 to re-perform OTA update based on the first update software. This helps improve a success rate of updating the ECU.

For example, when the UDS installer sends the first indication information and the rollback information to the ECU 1, if the quantity of times of sending the first indication information reaches the first threshold, the quantity of times of sending the rollback information reaches a second threshold, and the communication between the ECU 1 and the UDS installer is not resumed, that is, the UDS installer does not receive the third packet on the DOIP link, the UDS installer may further send the feedback information to the OTA manager, so that the OTA manager performs entire vehicle detection to try to resume the communication between the UDS installer and the ECU 1. For details, refer to related descriptions in the following embodiment of FIG. 5. The feedback information indicates that the ECU 1 is disconnected from the UDS installer.

In some possible embodiments, when the ECU 1 has a partition that stores the software of the earlier version, for example, the second partition of the ECU 1 is configured to store the foregoing second update software, in S401, the UDS installer may alternatively not start sending the first indication information, that is, not perform S402, but start sending the rollback information to indicate the ECU 1 to start the second update software, so as to try to resolve a problem of a disconnection between the ECU 1 and the UDS installer. This helps improve the success rate of resuming the communication between the ECU 1 and the UDS installer.

It can be learned that in this embodiment of this application, the UDS installer may send additional reset indication information, for example, the first indication information, to the ECU through a redundant communication link other than the first communication link, for example, the second communication link, to indicate the ECU to perform the second reset operation. This helps improve the success rate of resuming the communication between the ECU and the UDS installer. In addition, when the ECU has the partition that stores the software of the earlier version, for example, the second partition of the ECU is configured to store the second update software, if the communication between the ECU and the UDS installer is not resumed after the reset indication information is sent for a plurality of times, the UDS installer may further send the rollback information to the ECU through the redundant communication link, or the UDS installer may directly send the rollback information instead of sending the reset indication information, to try to resolve the ECU disconnection problem by starting the software of the earlier version. In this way, the ECU rolls back to the software of the earlier version used before update, and the UDS installer can accurately learn the update result of the ECU. This helps improve the reliability of updating the entire vehicle.

In some possible embodiments, when the OTA manager learns that the ECU is disconnected from the UDS installer, or the problem of the disconnection between the ECU and the UDS installer is still not resolved after the method shown in FIG. 3 or FIG. 4 is performed, the OTA manager may try to resolve the problem of the disconnection between ECU and UDS installer from a perspective of entire vehicle detection.

FIG. 5 is a flowchart of yet another update detection method according to an embodiment of this application.

The method may be applied to an update detection system. The system includes at least the OTA installer, the OTA manager, the ECU, and a vehicle power management module. The vehicle power management module, the OTA installer, the OTA manager, and the ECU are deployed on a same vehicle. Herein, a UDS installer is used as an example of the OTA installer to illustrate the solution, rather than to limit the OTA installer to be only the UDS installer. The method includes but is not limited to the following steps.

S501: The UDS installer sends first reset information to the ECU based on a first communication link.

Herein, in an ECU update process, information (for example, the first reset information, a first packet, and a response to the first packet) exchanged between the UDS installer and the ECU is carried on the first communication link. For details about the first communication link, refer to the related description of the first communication link in the embodiment of FIG. 2. Details are not described herein again.

Correspondingly, the ECU receives the first reset information, and performs a first reset operation based on the first reset information to start first update software, where the first update software is update software of a latest version programmed by the ECU.

S502: The UDS installer repeatedly sends the first packet to the ECU based on the first communication link.

Herein, the first packet is used to request to obtain a version number of update software currently used by the ECU.

For example, the first packet may be sent by the UDS installer after receiving, on the first communication link, response information of the ECU for the first reset information, or may be sent by the UDS installer after receiving result query information sent by the OTA manager, where the result query information is used to request to obtain an update result of the ECU.

S503: In a detection period, if the UDS installer does not receive, on the first communication link, the response of the ECU to the first packet, the UDS installer determines that the ECU is disconnected from the UDS installer.

For the foregoing steps S501 to S503, refer to the related description of S401 in the embodiment of FIG. 4. Details are not described herein again.

S504: When determining that the ECU is disconnected from the UDS installer, the UDS installer sends feedback information to the OTA manager.

Correspondingly, the OTA manager receives the feedback information sent by the UDS installer. The feedback information indicates that the ECU is disconnected from the UDS installer.

In some possible embodiments, the embodiment of FIG. 5 may alternatively be performed after the embodiment of FIG. 3 or FIG. 4. Specifically, S501 to S503 in FIG. 5 may not be performed. For a trigger condition for the UDS installer to send the feedback information to the OTA manager, refer to the related description of sending the feedback information by the UDS installer to the OTA manager in the embodiment of FIG. 3, or refer to the related description of sending the feedback information by the UDS installer to the OTA manager in the embodiment of FIG. 4. Details are not described herein again.

S505: The OTA manager controls the vehicle power management module to sequentially perform a power-off operation and a power-on operation.

Specifically, in response to the feedback information, the OTA manager sends power-off indication information to the vehicle power management module, where the power-off indication information indicates the vehicle power management module to perform the power-off operation. The vehicle power-off includes ECU power-off and hibernation, OTA manager power-off, and UDS installer power-off.

Further, when sending the power-off indication information, the OTA manager may further set a wake-up timer. If timing of the wake-up timer reaches a preset value, the OTA manager restarts work, that is, sends power-on indication information to the vehicle power management module. The power-on indication information indicates the vehicle power management module to perform the power-on operation, where the power-off indication information and the power-on indication information are used by the ECU to perform a second reset operation. For details about the second reset operation, refer to the description of the second reset operation in the foregoing embodiment of FIG. 2. Details are not described herein again.

That is, by controlling power-off and power-on of the entire vehicle, the ECU may indirectly perform the second reset operation. In this way, a problem of a disconnection between the ECU and the UDS installer may be resolved, and the OTA manager may also retry to check a version number of the disconnected ECU before the entire vehicle is powered off.

S506: The OTA manager sends result query information to the UDS installer. The result query information is used to request to obtain the update result of the ECU.

S507: The UDS installer repeatedly sends the first packet to the ECU based on the first communication link.

S508: In the detection period, if the UDS installer receives, on the first communication link, the response of the ECU to the first packet, the UDS installer sends result information to the OTA manager, where the result information indicates the update result of the ECU.

Herein, the result information is obtained by the UDS installer based on the response of the ECU to the first packet.

In an implementation, when the response of the ECU to the first packet is the foregoing second packet, and the second packet includes a version number of the first update software, the UDS installer determines, based on the second packet, that the ECU is successfully updated. In this case, the result information indicates that the ECU is successfully updated.

In an implementation, the response of the ECU to the first packet is the foregoing third packet in the embodiment of FIG. 3 or FIG. 4. The third packet includes a version number of second update software, and the second update software is software used by the ECU to install the first update software. Because a version number carried in the second packet is different from the version number of the first update software, the UDS installer determines that the ECU fails to be updated. In this case, the result information indicates that the ECU fails to be updated.

Herein, when the response of the ECU to the first packet is the foregoing third packet, it indicates that the ECU further performs a rollback operation after performing the second reset operation. For example, in the embodiment of FIG. 3, the ECU performs a rollback operation; or in the embodiment of FIG. 4, the ECU performs a rollback operation based on rollback information sent by the UDS installer.

S509: Within a target time range, the OTA manager receives the result information sent by the UDS installer, and obtains the update result of the ECU based on the result information.

For example, the target time range may be represented by using two absolute moments, or may be represented by using a start moment and duration. For example, a start moment of the target time range may be a sending moment of the result query information in S506.

Herein, the OTA manager may learn the update result of the ECU based on the result information. In this method, the OTA manager can accurately learn an update result of each ECU of the entire vehicle, and can accurately determine whether an ECU performs update or rollback when a software version used by the entire vehicle is unified. For example, in a process of updating the entire vehicle, an ECU 1 is successfully updated, but an ECU 2 fails to be updated (that is, successfully rolls back). In this case, to ensure a unified software version, the ECU 2 may be indicated to update again or the ECU 1 may be indicated to roll back. In this way, proper running of a service in a working environment matching the software version can be implemented.

In some possible embodiments, if the result information indicates that the ECU fails to be updated, it indirectly indicates that communication between the ECU and the UDS installer based on the first communication link is resumed, and the OTA manager may further send update indication information to the ECU based on the first communication link by using the UDS installer. The update indication information indicates the ECU to re-perform OTA update based on the first update software.

In some possible embodiments, if the OTA installer does not receive the foregoing result information within the target time range, the OTA manager may further prompt a user of the vehicle that the ECU is disconnected from the UDS installer, and request manual processing.

Herein, the user of the vehicle may be, for example, a driver, an owner of the vehicle, or a person who may use the vehicle.

For example, the OTA installer may control display of prompt information, where the prompt information is used to notify the user of the vehicle that "the ECU is disconnected from the UDS installer, and manual processing is requested".

The prompt information may be presented on, for example, an in-vehicle flat panel, an in-vehicle display, or a head-up display (head-up display, HUD) system, or presented on a display of a user terminal. The display may be, for example, a liquid crystal display (liquid crystal display, LCD), an inorganic or organic light-emitting diode (organic light-emitting diode, OLED), or an active matrix/organic light emitting diode (active matrix/organic light emitting diode, AMOLED).

It can be learned that, during implementation of this application, when sensing that the ECU is disconnected, the UDS installer may further provide a feedback to the OTA manager, and the OTA manager notifies the entire vehicle to be powered off and hibernated for a period of time and then be powered on again. In this way, the ECU may retry to start or run update software of a new version. This helps improve a success rate of resuming the communication between the ECU and the UDS installer, and also helps improve reliability of updating the entire vehicle.

FIG. 6 is a diagram of a structure of an update detection apparatus according to an embodiment of this application. An update detection apparatus 30 includes a receiving unit 310, a processing unit 312, and a sending unit 314. The update detection apparatus 30 may be implemented by using hardware, software, or a combination of software and hardware.

Herein, the update detection apparatus 30 may be the foregoing ECU or be deployed in the ECU.

Within a first time range, the receiving unit 310 receives a first packet sent by an OTA installer, and in response to the first packet, the sending unit 314 is configured to send a second packet to the OTA installer, where the first packet is used to request to obtain a version number of update software currently used by the ECU, and the second packet is associated with the first packet. Before the first time range, the processing unit 312 performs a first reset operation, and the ECU is disconnected from a UDS installer. The first reset operation is a 1st reset operation performed after the ECU programs first update software. Within the first time range and before the receiving unit 310 receives the first packet, the processing unit 312 performs at least one second reset operation.

The update detection apparatus 30 may be configured to implement the method on an ECU side described in the embodiment of FIG. 2 or FIG. 5, or configured to implement the method on an ECU 1 side described in the embodiment of FIG. 3 or FIG. 4. For example, in FIG. 2, the receiving unit 310 and the processing unit 312 may be configured to perform S201 and S203, and the sending unit 314 may be configured to perform S204. For another example, in FIG. 3, the receiving unit 310 and the processing unit 312 may be configured to perform S301 and S303, and the sending unit 314 may be configured to perform S304.

FIG. 7 is a diagram of a structure of another update detection apparatus according to an embodiment of this application. An update detection apparatus 40 includes a sending unit 410 and a receiving unit 412. The update detection apparatus 40 may be implemented by using hardware, software, or a combination of software and hardware.

Herein, the update detection apparatus 40 may be the foregoing OTA installer or be deployed in the OTA installer.

Within a first time range, the sending unit 410 is configured to perform a first operation, where the first operation is for resuming communication between the OTA installer and an ECU, and the ECU is an electronic control unit connected to the OTA installer; and before the first time range, the sending unit 410 is configured to send first reset information, and the receiving unit 412 does not receive a response of the ECU to a first packet, where the first reset information is used to request the ECU to perform a first reset operation, the first reset operation is a 1st reset operation performed by the ECU after the ECU programs first update software, and the first packet is used to request to obtain a version number of update software currently used by the ECU.

If the communication between the ECU and the OTA installer is resumed within the first time range, the receiving unit 412 receives a second packet that is from the ECU and that is in response to the first packet.

The update detection apparatus 40 may be configured to implement the method on an OTA installer side described in the embodiment of FIG. 2, or the method on a UDS installer side described in the embodiment of FIG. 3, FIG. 4, or FIG. 5. For example, in FIG. 2, the sending unit 410 may be configured to perform S202, and the receiving unit 412 may be configured to perform S205.

For another example, in FIG. 3, the sending unit 410 may be configured to perform S302, and the receiving unit 412 may be configured to perform S305.

For another example, in FIG. 4, the sending unit 410 may be configured to perform S402 and S403, and the receiving unit 412 may be configured to perform S401 and S405.

FIG. 8 is a diagram of a structure of still another update detection apparatus according to an embodiment of this application. An update detection apparatus 50 includes a receiving unit 510 and a sending unit 512. The update detection apparatus 50 may be implemented by using hardware, software, or a combination of software and hardware.

Herein, the update detection apparatus 50 may be the foregoing OTA manager or be deployed in the OTA manager.

The receiving unit 510 receives feedback information sent by an OTA installer, where the feedback information indicates that an ECU is disconnected from the OTA installer; and the sending unit 512 is configured to send power-off indication information, where the power-off indication information is used by the ECU to perform a second reset operation, the second reset operation is a reset operation performed after the ECU performs a first reset operation, and the first reset operation is a 1st reset operation performed by the ECU after the ECU programs first update software.

The update detection apparatus 50 may be configured to implement the method on an OTA manager side described in the embodiment of FIG. 5. For example, in the embodiment of FIG. 5, the receiving unit 510 may be configured to perform S504 and S508, and the sending unit 512 may be configured to perform S505 and S506. In some possible embodiments, the update detection apparatus 50 further includes a processing unit (not shown in the figure), and the sending unit may be configured to perform S509.

It should be understood that, division into units of the foregoing apparatus (for example, the update detection apparatus 30, the update detection apparatus 40, or the update detection apparatus 50) is merely logical function division. During actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of each unit of the apparatus. The processor is, for example, a general-purpose processor like a central processing unit (central processing unit, CPU), or a microprocessor. The memory is a memory inside the apparatus or a memory outside the apparatus. Alternatively, units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and functions of some or all of the foregoing units are implemented by designing a logical relationship between elements in the circuits. For another example, in another implementation, the hardware circuits may be implemented by using a programmable logic device (programmable logic device, PLD). A field programmable gate array (field programmable gate array, FPGA) is used as an example, and the field programmable gate array may include a large quantity of logic gate circuits. A configuration file is used to configure a connection relationship between the logic gate circuits, to implement functions of some or all of the foregoing units. All units of the foregoing apparatus may be implemented in a form of software invoked by a processor; or all units may be implemented in a form of a hardware circuit; or some units may be implemented in a form of software invoked by a processor, and a remaining part may be implemented in a form of a hardware circuit.

In embodiments of this application, the processor is a circuit that has a signal processing capability. In an implementation, the processor may be a circuit that has an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of hardware circuits. The logical relationship of the hardware circuits is fixed or reconfigurable. For example, the processor is an application-specific integrated circuit (application-specific integrated circuit, ASIC), or a hardware circuit implemented by a programmable logic device (programmable logic device, PLD), like an FPGA. In a reconfigurable hardware circuit, a process in which the processor loads a configuration document to implement hardware circuit configuration may be understood as a process in which the processor loads instructions to implement functions of some or all of the foregoing units. In addition, the circuit may alternatively be a hardware circuit designed for artificial intelligence, and may be understood as an ASIC, for example, a neural network processing unit (neural network processing unit, NPU), a tensor processing unit (tensor processing unit, TPU), and a deep learning processing unit (deep learning processing unit, DPU).

It can be learned that each unit in the foregoing apparatus may be one or more processors (or processing circuits) configured to implement the foregoing method, for example, a CPU, a GPU, an NPU, a TPU, a DPU, a microprocessor, a DSP, an ASIC, an FPGA, or a combination of at least two of these processor forms.

In addition, all or some of the units in the foregoing apparatus may be integrated, or may be independently implemented. In an implementation, these units are integrated and implemented in a form of a system-on-a-chip (system-on-a-chip, SOC). The SOC may include at least one processor, configured to implement any one of the foregoing methods or implement functions of each unit in the apparatus. Types of the at least one processor may be different, for example, include a CPU and an FPGA, a CPU and an artificial intelligence processor, a CPU and a GPU, and the like.

FIG. 9 is a diagram of a structure of a communication device according to an embodiment of this application. As shown in FIG. 9, a communication device 90 includes a processor 901, a communication interface 902, a memory 903, and a bus 904. The processor 901, the memory 903, and the communication interface 902 communicate with each other through the bus 904. It should be understood that quantities of processors and memories in the communication device 90 are not limited in this application.

In an implementation, the communication device 90 is the foregoing electronic control unit ECU or is included in the ECU.

In an implementation, the communication device 90 is the foregoing OTA installer or is included in the OTA installer. For example, the OTA installer may be the foregoing unified diagnostic service UDS installer.

In an implementation, the communication device 90 is the foregoing over-the-air OTA manager or is included in the OTA manager.

The bus 904 may be a peripheral component interconnect (peripheral component interconnect, PCI) standard bus, an extended industry standard architecture (extended industry standard architecture, EISA) bus, or the like. Buses may be classified into an address bus, a data bus, a control bus, and the like. For ease of representation, only one line is used to represent the bus in FIG. 9, but this does not mean that there is only one bus or only one type of bus. The bus 904 may include a channel for transferring information between various components (for example, the memory 903, the processor 901, and the communication interface 902) of the communication device 90.

For the processor 901, refer to the related description of the processor in the foregoing embodiment. Details are not described herein again.

The memory 903 is configured to provide storage space, and the storage space may store data such as an operating system and a computer program. The memory 903 may be one or a combination of a random access memory (random access memory, RAM), an erasable programmable read-only memory (erasable programmable read-only memory, EPROM), a read-only memory (read-only memory, ROM), or a portable read-only memory (compact disc read-only memory, CD-ROM). The memory 903 may exist independently, or may be integrated into the processor 901.

The communication interface 902 may be configured to provide an information input or output for the processor 901. Alternatively, the communication interface 902 may be configured to receive data sent from the outside and/or send data to the outside, and may be a wired link interface including an Ethernet cable or the like, or may be a wireless link (for example, Wi-Fi, Bluetooth, or universal wireless transmission) interface. Alternatively, the communication interface 902 may further include a transmitter (for example, a radio frequency transmitter or an antenna), a receiver, or the like coupled to the interface.

The processor 901 in the communication device 90 is configured to read a computer program stored in the memory 903, and is configured to perform the foregoing method, for example, the method described in FIG. 2, FIG. 3, FIG. 4, or FIG. 5.

In a possible design, the communication device 90 may be one or more modules in an execution body for executing the method on the ECU side shown in FIG. 2, FIG. 3, FIG. 4, or FIG. 5. The processor 901 may be configured to read one or more computer programs stored in the memory, and is configured to perform the following operations: within a first time range, receiving, by using the receiving unit 310, a first packet sent by an OTA installer, and in response to the first packet, sending a second packet to the OTA installer by using the sending unit 314, where the first packet is used to request to obtain a version number of update software currently used by the ECU, and the second packet is associated with the first packet; before the first time range, the processing unit 312 performs a first reset operation, and the ECU is disconnected from a UDS installer, where the first reset operation is a 1st reset operation performed after the ECU programs first update software; and within the first time range and before the receiving unit 310 receives the first packet, the processing unit 312 performs at least one second reset operation.

In a possible design, the communication device 90 may be one or more modules in an execution body for executing the method on a UDS installer side shown in FIG. 2, FIG. 3, FIG. 4, or FIG. 5. The processor 901 may be configured to read one or more computer programs stored in the memory, and is configured to perform the following operations:

within a first time range, performing a first operation by using the sending unit 410, where the first operation is for resuming communication between the OTA installer and the ECU, and the ECU is an electronic control unit connected to the OTA installer; and before the first time range, the sending unit 410 is configured to send first reset information, and the receiving unit 412 does not receive a response of the ECU to a first packet, where the first reset information is used to request the ECU to perform a first reset operation, the first reset operation is a 1st reset operation performed by the ECU after the ECU programs first update software, and the first packet is used to request to obtain a version number of update software currently used by the ECU; and

within the first time range, if the communication between the ECU and the OTA installer is resumed, receiving, by using the receiving unit 412, a second packet that is from the ECU and that is in response to the first packet.

In a possible design, the communication device 90 may be one or more modules in an execution body for executing the method on an OTA manager side shown in FIG. 5. The processor 901 may be configured to read one or more computer programs stored in the memory, and is configured to perform the following operations: receiving, by using the receiving unit 510, feedback information sent by an OTA installer, where the feedback information indicates that the ECU is disconnected from the OTA installer; and sending, by using the sending unit 512, power-off indication information, where the power-off indication information is used by the ECU to perform a second reset operation, the second reset operation is a reset operation performed after the ECU performs a first reset operation, and the first reset operation is a 1st reset operation performed by the ECU after the ECU programs first update software.

In the foregoing embodiments in this specification, the descriptions of each embodiment have respective focuses. For a part that is not described in detail in an embodiment, refer to related descriptions in another embodiment. In addition, in various embodiments of this application, unless otherwise stated or there is a logic conflict, terms and/or descriptions in embodiments are consistent and may be mutually referenced, and technical features in different embodiments may be combined based on an internal logical relationship thereof, to form a new embodiment.

It should be noted that a person of ordinary skill in the art may learn that, all or a part of the steps in each method of the foregoing embodiments may be implemented by using instructions from a program to related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM) or another optical disk memory, a magnetic disk memory, a magnetic tape memory, or any other computer-readable medium that can be configured to carry or store data.

The technical solutions of this application essentially, or the contributing part, or all or a part of the technical solutions may be implemented in a form of a software product. A computer program product is stored in a storage medium and includes several instructions for instructing a device (which may be a personal computer, a server, a network device, a robot, a single-chip microcomputer, a chip, a robot, or the like) to perform all or a part of the steps of the methods described in embodiments of this application.

## Claims

**1.** An update detection method, wherein the method comprises:

within a first time range, receiving, by an electronic control unit ECU, a first packet sent by an over-the-air OTA installer, and sending, by the ECU, a second packet to the OTA installer in response to the first packet, wherein the first packet is used to request to obtain a version number of update software currently used by the ECU;
before the first time range, performing, by the ECU, a first reset operation, wherein the ECU is disconnected from the OTA installer, and the first reset operation is a 1$^{st}$ reset operation performed by the ECU after the ECU programs first update software; and
within the first time range and before the ECU receives the first packet, performing, by the ECU, at least one second reset operation.

**2.** The method according to claim 1, wherein the first packet and the second packet are carried on a first communication link, and the first communication link comprises a diagnostic communication link based on an Ethernet and/or a diagnostic communication link based on a first in-vehicle signal bus.

**3.** The method according to claim 2, wherein the second packet comprises a version number of the first update software.

**4.** The method according to claim 2 or 3, wherein a trigger condition for the ECU to perform the at least one second reset operation is as follows:

within first preset duration after the ECU starts the first update software, the ECU does not receive the first packet sent by the OTA installer;
within second preset duration after the ECU starts the first update software, the ECU does not receive a heartbeat packet sent by the OTA installer;
the ECU receives first indication information, wherein the first indication information indicates that the ECU is disconnected from the OTA installer, or indicates the ECU to start performing the second reset operation; or
the ECU receives power-off indication information, wherein the power-off indication information is used by the ECU to perform the second reset operation.

**5.** The method according to claim 4, wherein the first indication information is carried on a second communication link, and the second communication link is different from the first communication link.

**6.** The method according to claim 4 or 5, wherein a quantity of times of performing the second reset operation is associated with a quantity of times of receiving the first indication information by the ECU.

**7.** The method according to any one of claims 2 to 5, wherein the first time range is at least one first detection period, and the at least one second reset operation corresponds to the at least one first detection period.

**8.** The method according to any one of claims 2 to 7, wherein the method further comprises:
when a quantity of the at least one second reset operation reaches a first threshold, stopping, by the ECU, monitoring the first packet on the first communication link.

**9.** The method according to any one of claims 2 to 7, wherein the ECU comprises a first partition and a second partition, the first partition is configured to store the first update software, the second partition is configured to store second update software, the second update software is software used before the ECU programs the first update software, and when a quantity of the at least one second reset operation reaches a first threshold, the method further comprises:

starting, by the ECU, the second update software; and
in a second detection period, if the ECU receives the first packet from the OTA installer based on the first communication link, sending, by the ECU, a third packet to the OTA installer based on the first communication link, wherein
the third packet comprises a version number of the second update software.

**10.** The method according to claim 9, wherein before the starting, by the ECU, the second update software, the method further comprises:

receiving, by the ECU, rollback information sent by the OTA installer, wherein the rollback information is carried on the second communication link, and the second communication link is different from the first communication link; and
the starting, by the ECU, the second update software comprises: starting, by the ECU, the second update software based on the rollback information.

**11.** The method according to any one of claims 5 to 10, wherein the ECU is communicatively connected to the OTA installer through a distributed gateway in a vehicle, the first communication link comprises the diagnostic communication link based on the Ethernet and/or the diagnostic communication link based on the first in-vehicle signal bus, and the second communication link comprises:

at least one of a service communication link based on a second in-vehicle signal bus and a service communication link based on the Ethernet; or
a third communication link and a fourth communication link, wherein the third communication link is configured to connect the OTA installer and the distributed gateway, and the fourth communication link is configured to connect the distributed gateway and the ECU, wherein
if the diagnostic communication link based on the Ethernet in the first communication link is configured to connect the OTA installer and the distributed gateway, and the diagnostic communication link based on the first in-vehicle signal bus in the first communication link is configured to connect the distributed gateway and the ECU,
when the third communication link is a diagnostic communication link based on any in-vehicle signal bus, the fourth communication link is a diagnostic communication link based on the Ethernet or a diagnostic communication link based on a third in-vehicle signal bus, wherein the third in-vehicle signal bus is different from the first in-vehicle signal bus; or
when the third communication link is a service communication link based on the Ethernet or any in-vehicle signal bus, the fourth communication link is a service communication link based on the Ethernet or any in-vehicle signal bus.

**12.** An update detection method, wherein the method comprises:

performing, by an over-the-air OTA installer, a first operation within a first time range, wherein the first operation is for resuming communication between the OTA installer and an electronic control unit ECU, and the ECU is an electronic control unit connected to the OTA installer; and before the first time range, sending, by the OTA installer, first reset information without receiving a response of the ECU to a first packet, wherein the first reset information is used to request the ECU to perform a first reset operation, the first reset operation is a 1$^{st}$ reset operation performed by the ECU after the ECU programs first update software, and the first packet is used to request to obtain a version number of update software currently used by the ECU; and
within the first time range, if the communication between the ECU and the OTA installer is resumed, receiving, by the OTA installer, a second packet that is from the ECU and that is in response to the first packet.

**13.** The method according to claim 12, wherein the first operation comprises repeatedly sending the first packet.

**14.** The method according to claim 13, wherein the first packet and the second packet are carried on a first communication link, and the first communication link comprises a diagnostic communication link based on an Ethernet and/or a diagnostic communication link based on a first in-vehicle signal bus.

**15.** The method according to claim 13 or 14, wherein the ECU comprises a first partition and a second partition, the first partition is configured to store the first update software, the second partition is configured to store second update software, the second update software is software used before the ECU programs the first update software, and the first operation further comprises:
sending rollback information at least once based on a second communication link, wherein the rollback information indicates the ECU to start the second update software, and the second communication link is different from the first communication link.

**16.** The method according to claim 13 or 14, wherein the first operation further comprises:

sending first indication information at least once based on a second communication link, wherein the first indication information indicates that the ECU is disconnected from the OTA installer, or indicates the ECU to perform a second reset operation, and the second communication link is different from the first communication link; or

sending a heartbeat packet based on the first communication link.

**17.** The method according to claim 16, wherein a quantity of times of performing the second reset operation is associated with a quantity of times of sending the first indication information.

**18.** The method according to claim 16 or 17, wherein the ECU comprises a first partition and a second partition, the first partition is configured to store the first update software, the second partition is configured to store second update software, the second update software is software used before the ECU programs the first update software, and the first operation further comprises:
when the quantity of times of sending the first indication information reaches a first threshold and the communication between the ECU and the OTA installer is not resumed, sending, by the OTA installer, rollback information to the ECU based on the second communication link, wherein the rollback information indicates the ECU to start the second update software, and the second communication link is different from the first communication link.

**19.** The method according to any one of claims 12 to 18, wherein after the receiving, by the OTA installer, a second packet, the method further comprises:

when a version number comprised in the second packet is the same as a version number of the first update software, determining, by the OTA installer, that the ECU is successfully updated; or

when a version number comprised in the second packet is different from a version number of the first update software, determining, by the OTA installer, that the ECU fails to be updated.

**20.** The method according to claim 19, wherein after the determining that the ECU fails to be updated, the method further comprises:
sending update indication information to the ECU, wherein the update indication information indicates the ECU to re-perform OTA update based on the first update software.

**21.** The method according to any one of claims 12 to 20, wherein if the OTA installer does not receive the second packet within the first time range, the method further comprises:
sending, by the OTA installer, feedback information to an OTA manager, wherein the feedback information indicates that the ECU is disconnected from the OTA installer.

**22.** The method according to any one of claims 15 to 21, wherein the ECU is communicatively connected to the OTA installer through a distributed gateway in a vehicle, the first communication link comprises the diagnostic communication link based on the Ethernet and/or the diagnostic communication link based on the first in-vehicle signal bus, and the second communication link comprises:

at least one of a service communication link based on a second in-vehicle signal bus and a service communication link based on the Ethernet; or

a third communication link and a fourth communication link, wherein the third communication link is configured to connect the OTA installer and the distributed gateway, and the fourth communication link is configured to connect the distributed gateway and the ECU, wherein

if the diagnostic communication link based on the Ethernet in the first communication link is configured to connect the OTA installer and the distributed gateway, and the diagnostic communication link based on the first in-vehicle signal bus in the first communication link is configured to connect the distributed gateway and the ECU,

when the third communication link is a diagnostic communication link based on any in-vehicle signal bus, the fourth communication link is a diagnostic communication link based on the Ethernet or a diagnostic communication link based on a third in-vehicle signal bus, wherein the third in-vehicle signal bus is different from the first in-vehicle signal bus; or

when the third communication link is a service communication link based on the Ethernet or any in-vehicle signal bus, the fourth communication link is a service communication link based on the Ethernet or any in-vehicle signal bus.

**23.** An update detection method, wherein the method comprises:

receiving, by an over-the-air OTA manager, feedback information sent by an OTA installer, wherein the feedback information indicates that an electronic control unit ECU is disconnected from the OTA installer; and
sending, by the OTA manager, power-off indication information, wherein the power-off indication information is used by the ECU to perform a second reset operation, the second reset operation is a reset operation performed after the ECU performs a first reset operation, and the first reset operation is a 1st reset operation performed by the ECU after the ECU programs first update software.

**24.** The method according to claim 23, wherein after the sending, by the OTA manager, power-off indication information, the method further comprises:

receiving, by the OTA manager within preset duration, result information sent by the OTA installer, wherein the result information indicates an update result of the ECU, and the result information is a response to result query information sent by the OTA manager; and
obtaining, by the OTA manager, the update result of the ECU based on the result information.

**25.** The method according to claim 24, wherein the method further comprises:
within the preset duration, if the OTA manager does not receive the result information, prompting, by the OTA manager, a user of a vehicle that the ECU is disconnected from the OTA installer, and requesting manual processing.

**26.** An update detection apparatus, wherein the apparatus is an electronic control unit ECU or is comprised in an ECU, and the apparatus comprises a receiving unit, a processing unit, and a sending unit, wherein

within a first time range, the receiving unit receives a first packet sent by an over-the-air OTA installer, and the sending unit sends a second packet to the OTA installer in response to the first packet, wherein the first packet is used to request to obtain a version number of update software currently used by the ECU;
before the first time range, the processing unit performs a first reset operation, and the ECU is disconnected from the OTA installer, wherein the first reset operation is a 1st reset operation performed by the processing unit after the processing unit programs first update software; and
within the first time range and before the receiving unit receives the first packet, the processing unit performs at least one second reset operation.

**27.** An update detection apparatus, wherein the apparatus is an over-the-air OTA installer or is comprised in an OTA installer, and the apparatus comprises a sending unit and a receiving unit, wherein

within a first time range, the sending unit is configured to perform a first operation, wherein the first operation is for resuming communication between the OTA installer and an electronic control unit ECU, and the ECU is an electronic control unit connected to the OTA installer; and before the first time range, the sending unit sends first reset information, and the receiving unit does not receive a response of the ECU to a first packet, wherein the first reset information is used to request the ECU to perform a first reset operation, the first reset operation is a 1st reset operation performed by the ECU after the ECU programs first update software, and the first packet is used to request to obtain a version number of update software currently used by the ECU; and
within the first time range, if the communication between the ECU and the OTA installer is resumed, the receiving unit receives a second packet that is from the ECU and that is in response to the first packet.

**28.** An update detection apparatus, wherein the apparatus is an over-the-air OTA manager or is comprised in an OTA manager, and the apparatus comprises a receiving unit and a sending unit, wherein

the receiving unit receives feedback information sent by an OTA installer, wherein the feedback information indicates that an electronic control unit ECU is disconnected from the OTA installer; and
the sending unit is configured to send power-off indication information, wherein the power-off indication information is used by the ECU to perform a second reset operation, the second reset operation is a reset operation performed after the ECU performs a first reset operation, and the first reset operation is a 1st reset operation performed by the ECU after the ECU programs first update software.

**29.** An electronic control unit, wherein the electronic control unit is configured to implement the method according to any one of claims 1 to 11.

**30.** A chip, wherein the chip comprises at least one processor and a communication interface;

the communication interface is configured to receive and/or send data, and/or the communication interface is configured to provide an input and/or output for the processor; and
the at least one processor is configured to implement the method according to any one of claims 1 to 11, or is configured to implement the method according to any one of claims 12 to 22, or is configured to implement the method according to any one of claims 23 to 25.

**31.** An update detection system, wherein the system comprises a first apparatus and a second apparatus, or comprises a first apparatus, a second apparatus, and a third apparatus, wherein the first apparatus is configured to implement the method according to any one of claims 1 to 11, the second apparatus is configured to implement the method according to any one of claims 12 to 22, and the third apparatus is configured to implement the method according to any one of claims 23 to 25.

**32.** A vehicle, wherein the vehicle comprises at least one of the apparatus according to claim 26 or 29, the apparatus according to claim 27, and the apparatus according to claim 28, or comprises the update detection system according to claim 31.

**33.** A computer-readable storage medium, wherein the computer-readable storage medium stores program instructions, and the program instructions are used to implement the method according to any one of claims 1 to 11, 12 to 22, or 23 to 25.

**34.** A computer program product, comprising computer instructions, wherein when the computer instructions are run on a processor, the method according to any one of claims 1 to 11, 12 to 22, or 23 to 25 is implemented.

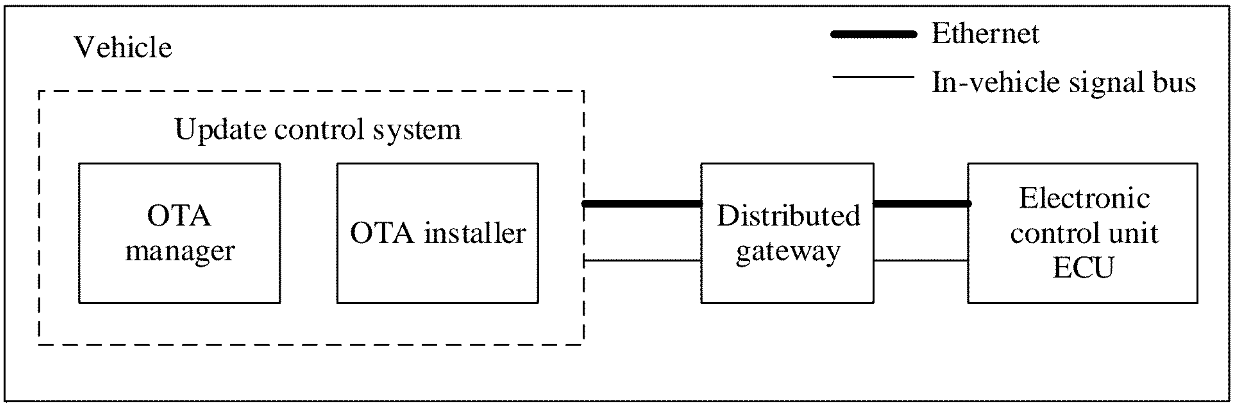
Vehicle
Ethernet
In-vehicle signal bus
Update control system
OTA manager
OTA installer
Distributed gateway
Electronic control unit ECU

FIG. 1

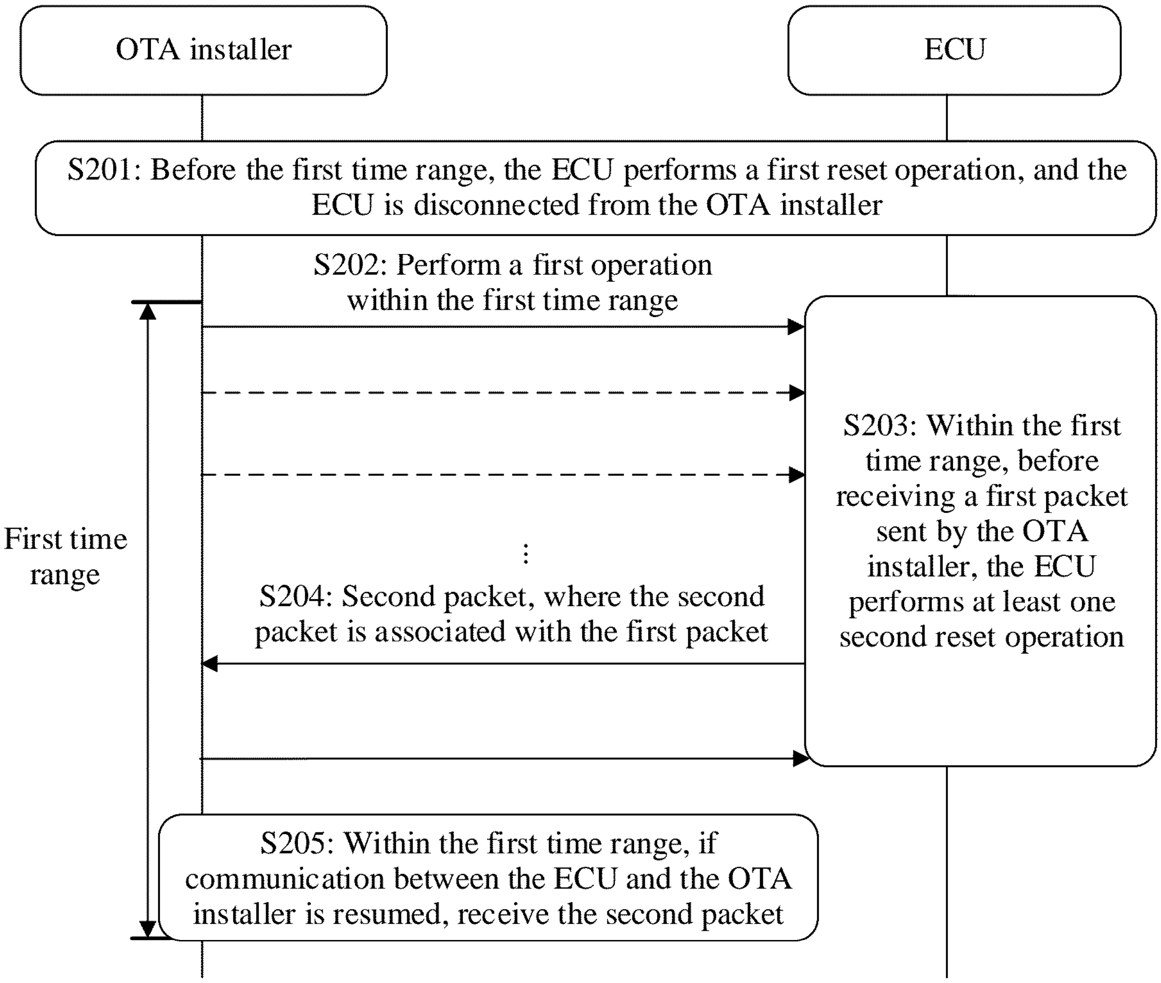
OTA installer
ECU
S201: Before the first time range, the ECU performs a first reset operation, and the ECU is disconnected from the OTA installer
S202: Perform a first operation within the first time range
S203: Within the first time range, before receiving a first packet sent by the OTA installer, the ECU performs at least one second reset operation
First time range
S204: Second packet, where the second packet is associated with the first packet
S205: Within the first time range, if communication between the ECU and the OTA installer is resumed, receive the second packet

FIG. 2

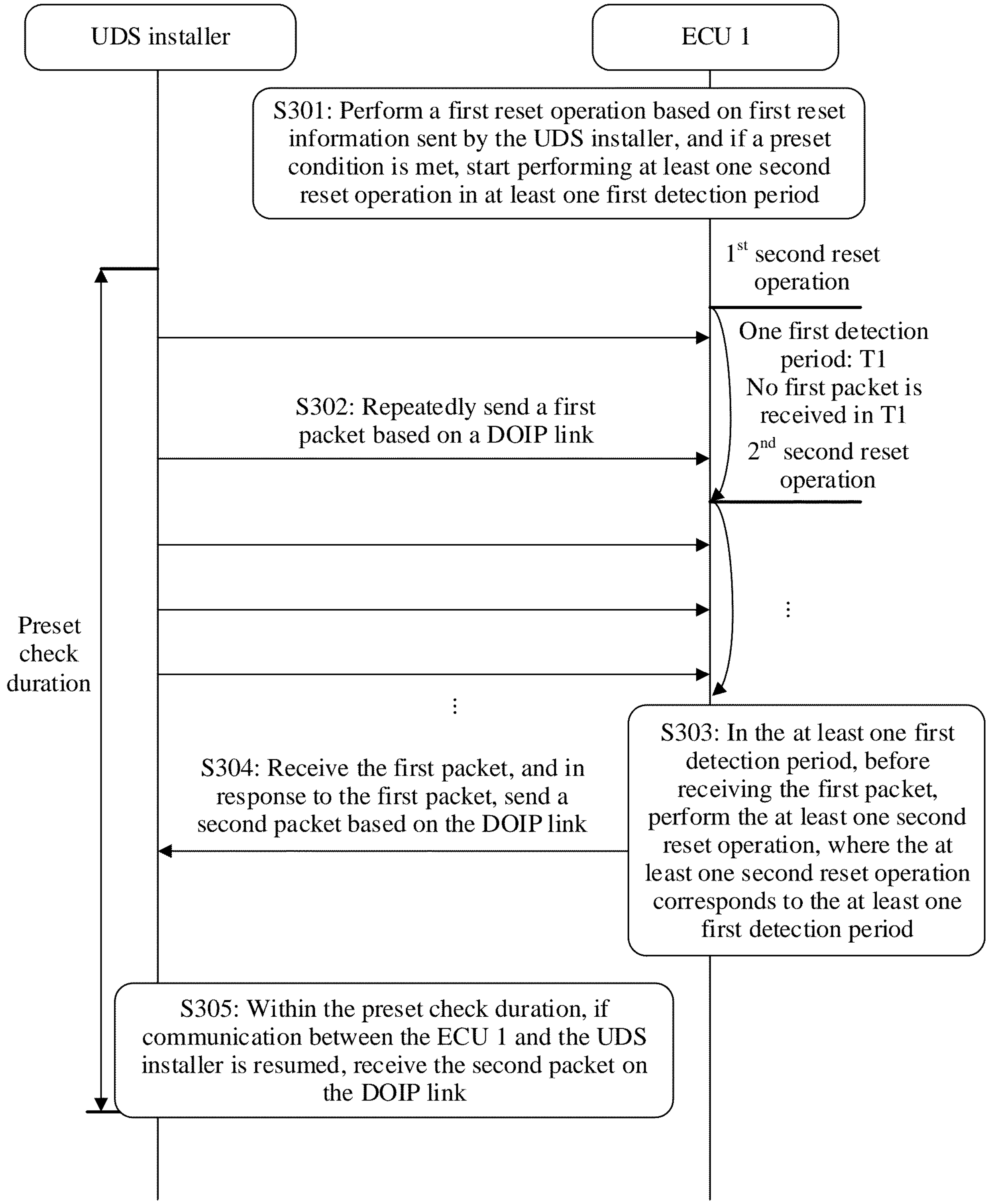

UDS installer
ECU 1
S301: Perform a first reset operation based on first reset information sent by the UDS installer, and if a preset condition is met, start performing at least one second reset operation in at least one first detection period
1st second reset operation
One first detection period: T1
No first packet is received in T1
2nd second reset operation
S302: Repeatedly send a first packet based on a DOIP link
Preset check duration
⋮
⋮
S303: In the at least one first detection period, before receiving the first packet, perform the at least one second reset operation, where the at least one second reset operation corresponds to the at least one first detection period
S304: Receive the first packet, and in response to the first packet, send a second packet based on the DOIP link
S305: Within the preset check duration, if communication between the ECU 1 and the UDS installer is resumed, receive the second packet on the DOIP link


FIG. 3

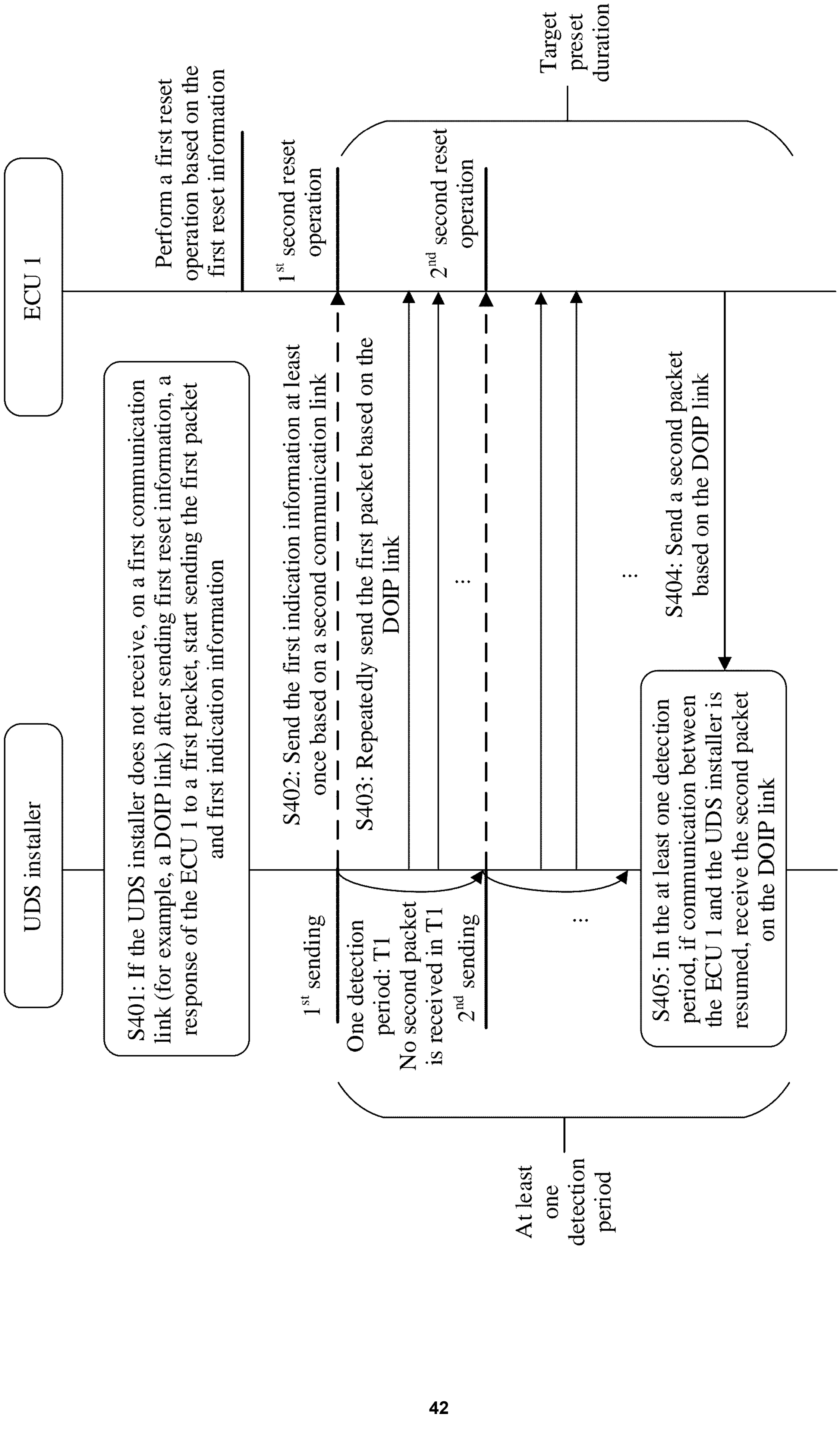
UDS installer
ECU 1
S401: If the UDS installer does not receive, on a first communication link (for example, a DOIP link) after sending first reset information, a response of the ECU 1 to a first packet, start sending the first packet and first indication information
Perform a first reset operation based on the first reset information
S402: Send the first indication information at least once based on a second communication link
1st second reset operation
S403: Repeatedly send the first packet based on the DOIP link
2nd second reset operation
1st sending
One detection period: T1
No second packet is received in T1
2nd sending
...
S404: Send a second packet based on the DOIP link
S405: In the at least one detection period, if communication between the ECU 1 and the UDS installer is resumed, receive the second packet on the DOIP link
Target preset duration
At least one detection period

FIG. 4

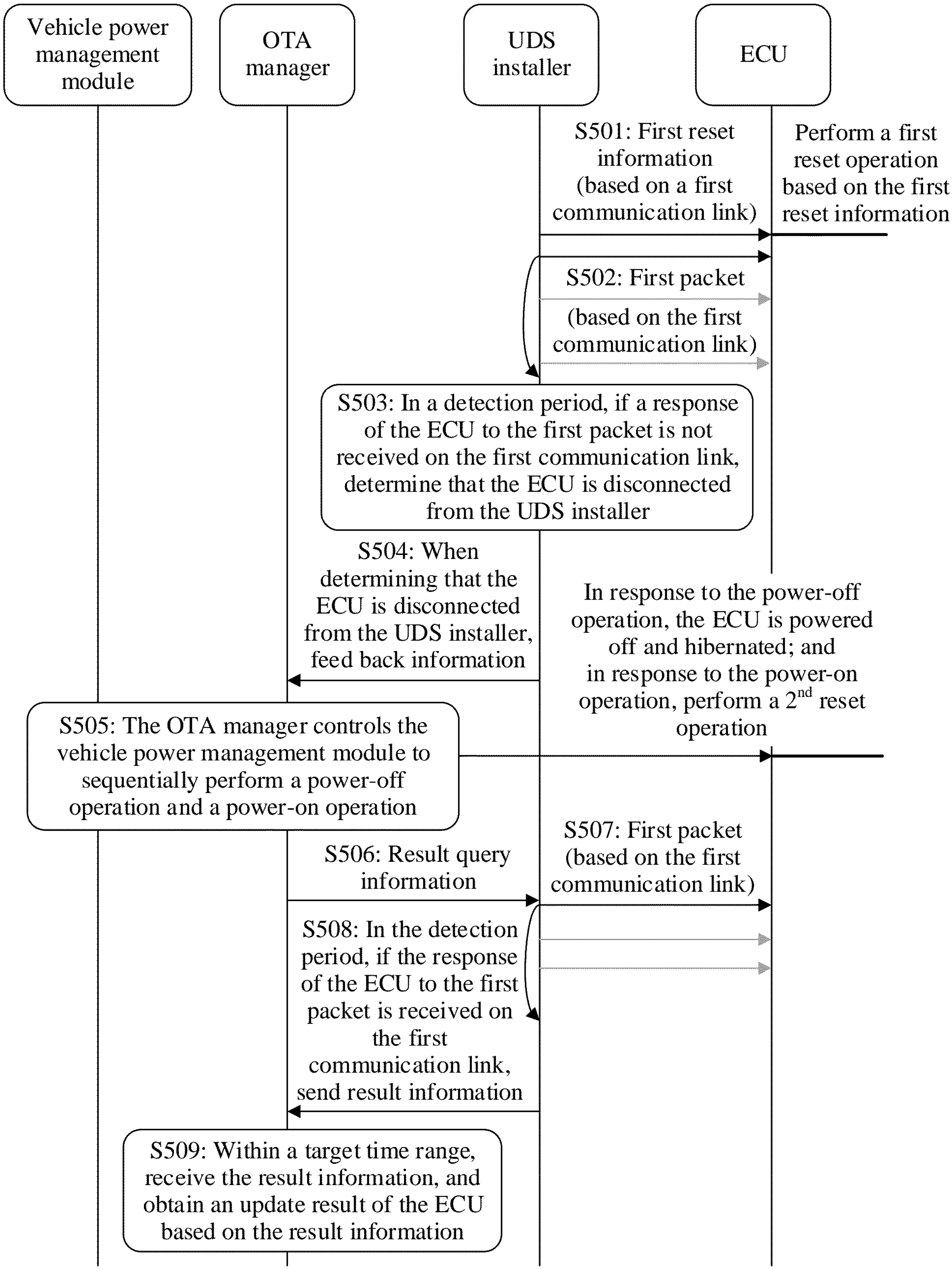
Vehicle power management module
OTA manager
UDS installer
ECU
S501: First reset information (based on a first communication link)
Perform a first reset operation based on the first reset information
S502: First packet
(based on the first communication link)
S503: In a detection period, if a response of the ECU to the first packet is not received on the first communication link, determine that the ECU is disconnected from the UDS installer
S504: When determining that the ECU is disconnected from the UDS installer, feed back information
In response to the power-off operation, the ECU is powered off and hibernated; and in response to the power-on operation, perform a 2nd reset operation
S505: The OTA manager controls the vehicle power management module to sequentially perform a power-off operation and a power-on operation
S506: Result query information
S507: First packet (based on the first communication link)
S508: In the detection period, if the response of the ECU to the first packet is received on the first communication link, send result information
S509: Within a target time range, receive the result information, and obtain an update result of the ECU based on the result information

FIG. 5

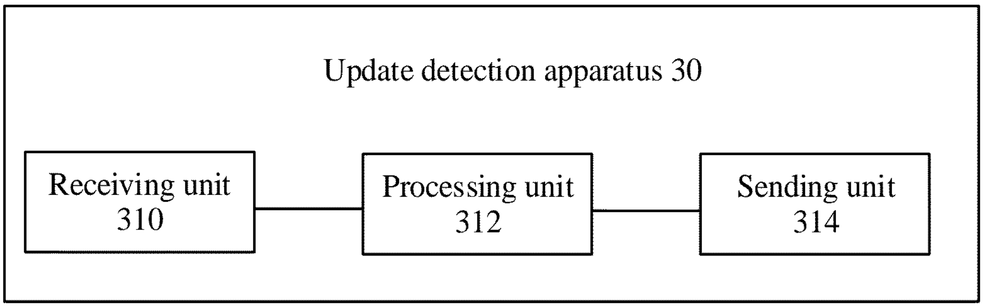


FIG. 6

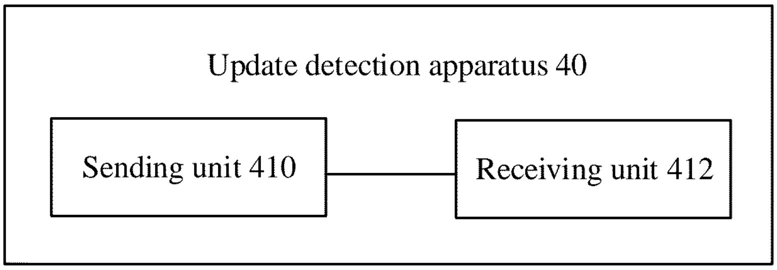


FIG. 7

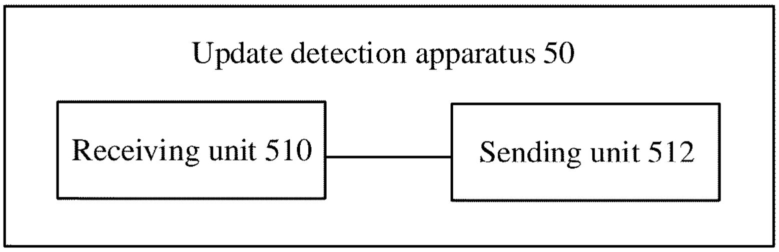


FIG. 8

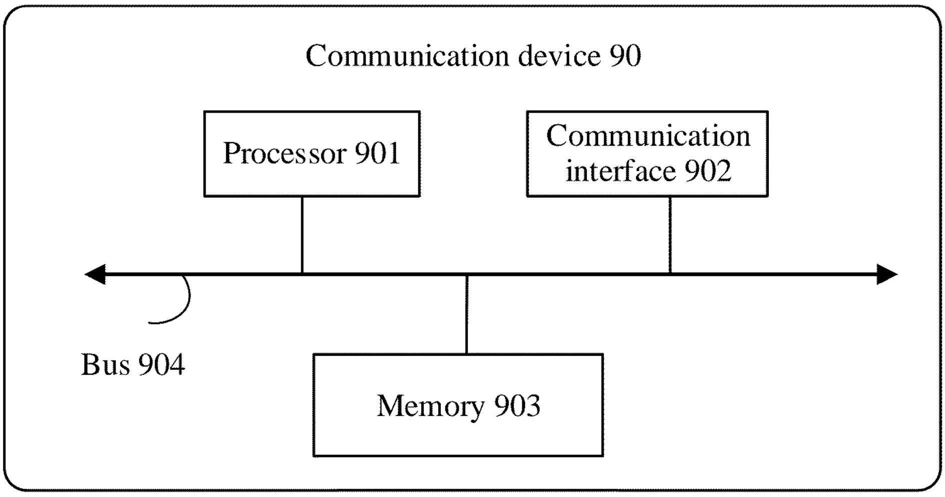


FIG. 9

## INTERNATIONAL SEARCH REPORT

International application No.
**PCT/CN2023/084363**

**A. CLASSIFICATION OF SUBJECT MATTER**

G06F8/65(2018.01)i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNTXT, ENTXT, ENTXTC, DWPI: 版本号, 成功, 断开, 复位, 检测, 空中下载, 控制器, 连接, 连上, 判断, 升级, 失联, 校验, 验证, 重启, 重新启动, again, second, twice, OTA, over the air, ECU, electronic control unit, version, reset, restart, connect, disconnect, verify, detect, upgrade

**C. DOCUMENTS CONSIDERED TO BE RELEVANT**

| Category* | Citation of document, with indication, where appropriate, of the relevant passages | Relevant to claim No. |
|---|---|---|
| Y | CN 113448604 A (JIANGLING MOTORS CO., LTD.) 28 September 2021 (2021-09-28) description, paragraphs [0046]-[0074] | 1-34 |
| Y | CN 111614765 A (EXCELFORE INFORMATION TECHNOLOGY (SHANGHAI) CO., LTD.) 01 September 2020 (2020-09-01) description, paragraphs [0040]-[0057] | 1-34 |
| Y | CN 111930407 A (GUANGZHOU AUTOMOBILE GROUP CO., LTD.) 13 November 2020 (2020-11-13) description, paragraph [0033] | 1-34 |
| Y | CN 114428629 A (ANHUI JIANGHUAI AUTOMOBILE GROUP CO., LTD.) 03 May 2022 (2022-05-03) description, paragraphs [0080]-[0112] | 9-10,15,18 |
| A | CN 110324193 A (QINGDAO HISENSE MEDICAL EQUIPMENT CO., LTD.) 11 October 2019 (2019-10-11) entire document | 1-34 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 October 2023** | **28 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/084363**

**C. DOCUMENTS CONSIDERED TO BE RELEVANT**

| Category* | Citation of document, with indication, where appropriate, of the relevant passages | Relevant to claim No. |
|---|---|---|
| A | CN 115202692 A (ZEJING (XI'AN) AUTOMOTIVE ELECTRONIC CO., LTD.) 18 October 2022 (2022-10-18) entire document | 1-34 |
| A | US 2019050217 A1 (INTEL CORP.) 14 February 2019 (2019-02-14) entire document | 1-34 |

Form PCT/ISA/210 (second sheet) (July 2022)

**INTERNATIONAL SEARCH REPORT**
**Information on patent family members**

International application No.
**PCT/CN2023/084363**

| Patent document cited in search report | | | Publication date (day/month/year) | Patent family member(s) | | | Publication date (day/month/year) |
|---|---|---|---|---|---|---|---|
| CN | 113448604 | A | 28 September 2021 | CN | 113448604 | B | 31 March 2023 |
| CN | 111614765 | A | 01 September 2020 | CN | 111614765 | B | 18 November 2022 |
| CN | 111930407 | A | 13 November 2020 | CN | 111930407 | B | 24 August 2021 |
| CN | 114428629 | A | 03 May 2022 | | None | | |
| CN | 110324193 | A | 11 October 2019 | CN | 110324193 | B | 02 August 2022 |
| CN | 115202692 | A | 18 October 2022 | | None | | |
| US | 2019050217 | A1 | 14 February 2019 | US | 11204750 | B2 | 21 December 2021 |

Form PCT/ISA/210 (patent family annex) (July 2022)